# EUROPÄISCHE PATENTSCHRIFT

(11) **EP 3 947 018 B1**
(45) Veröffentlichungstag und Bekanntmachung des Hinweises auf die Patenterteilung: **21.06.2023**
(21) Anmeldenummer: 19723308.3
(22) Anmeldetag: 05.04.2019
(51) Int. Cl.: H01M 50/213, H01M 50/271, H01M 50/342, H01M 50/503, H01M 50/233, H01M 50/284

(54) **BATTERIEZELLENMAKROMODULGEHÄUSE UND EIN BATTERIEZELLENMAKROMODUL**
BATTERY CELL MACROMODULE HOUSING AND BATTERY CELL MACROMODULE
BOÎTIER DE MACRO-MODULE D'ÉLÉMENTS DE BATTERIE ET UN MACRO-MODULE D'ÉLÉMENTS DE BATTERIE

(43) Veröffentlichungstag der Anmeldung: 09.02.2022
(60) Teilanmeldung: 22161869.7
(73) Patentinhaber: SCIO Technology GmbH, 63743 Aschaffenburg (DE)
(72) Erfinder: WEIS, Alexander, 63768 Hösbach (DE)
(74) Vertreter: Angerhausen, Christoph
(86) Internationale Anmeldenummer: PCT/DE2019/100315
(87) Internationale Veröffentlichungsnummer: WO 2020/200338

(56) Entgegenhaltungen:
- WO-A1-2011/033727
- CN-A- 108 389 984
- DE-A1-102008 059 960
- DE-A1-102013 109 808
- DE-A1-102016 113 177

## Beschreibung

Die vorliegende Erfindung betrifft ein Batteriezellenmakromodulgehäuse zum Aufnehmen einer Mehrzahl zylindrischer Batteriezellen in einem Innenraum des Batteriezellenmakromodulgehäuses insbesondere für den Einsatz in elektrisch betriebenen Fahrzeugen, beispielsweise Elektroroller, Elektroautos, Elektro-Lkw, Elektro-Nutzfahrzeuge, Elektrobooten oder dergleichen, oder auch für Storage-Systeme. Ferner betrifft die Erfindung eine Kontaktiervorrichtung für ein Batteriezellenmakromodulgehäuse, einen Gehäusedeckel für eine Kontaktiervorrichtung für ein Batteriezellenmakromodulgehäuse sowie ein Batteriezellenmakromodul. Das Batteriezellenmakromodulgehäuse weist eine Gehäuseschale auf welche zwei längsseitige Wände und zwei stirnseitige Wände umfasst, wobei die längsseitigen Wände senkrecht zu den stirnseitigen Wänden angeordnet sind und sich die längsseitigen Wände und die stirnseitigen Wände jeweils parallel voneinander beabstandet gegenüberliegen, sodass die Wände den Innenraum ringförmig umschließen. Die Gehäuseschale weist ferner eine Mehrzahl an Positioniereinbuchtungen auf, welche auf den Innenseiten der Wände jeweils zum Positionieren einer Batteriezelle senkrecht zu der von den Wänden umschlossenen Durchtrittsebene ausgebildet sind, wobei die Innenseiten der Wände jeweils zwischen benachbarten Positioniereinbuchtungen angeordnete Trennelemente aufweisen, welche in den Innenraum hineinragen, wobei die längsseitigen Wände länger sind als die stirnseitigen Wände und die Positioniereinbuchtungen in den stirnseitigen Wänden einen größeren Abstand zueinander aufweisen als die Positioniereinbuchtungen in den längsseitigen Wänden,
wobei das Batteriezellenmakromodulgehäuse an der Ober- und/oder der Unterseite der Gehäuseschale mit einem Deckel verschlossen ist, der jeweils zwei übereinanderliegende Platten aufweist, von denen eine Außenplatte aus einem Material mit hoher Wärmeleitfähigkeit und von denen eine Innenplatte aus einem elektrisch nichtleitenden Material besteht, wobei zumindest eine der Platten jeweils eine Mehrzahl vorgeprägter Sollbruchflächen aufweist, die jeweils im Wesentlichen fluchtend mit den Längsachsen mit den im Gehäuse aufnehmbaren Batteriezellen angeordnet sind, so dass im Falle einer Ausgasung einer oder mehrerer der Batteriezellen austretende Heißgase die Sollbruchflächen aus den Platten herausschlagen können.

Ein Batteriezellenmakromodulgehäuse ist beispielsweise bekannt aus der DE 10 2008 059 960 A1. Weitere Batteriezellenmakromodulgehäuse sind außerdem bekannt aus der DE 10 2016 113 117 A1 oder der WO 2011/033727 A1. Eine Kontaktiervorrichtung für ein Batteriezellenmakromodulgehäuse ist bekannt aus der CN 108 389 984 A.

Ein Problem von Batteriezellenmodulen besteht darin, dass sich die Module im Betrieb, insbesondere bei hoher Belastung, stark aufheizen und sich infolgedessen ausdehnen. Diese temperaturabhängigen Volumenänderungen, insbesondere bezogen auf den Außenumfang der Batteriezellen, haben zur Folge, dass die einzelnen Batteriezellen nicht unmittelbar aneinander anliegend nebeneinander angeordnet werden können. Aufgrund des entstehenden Drucks besteht das Risiko, dass die Batteriezellen, beziehungsweise die die Batteriezellen umgebende Infrastruktur, oder das gesamte Batteriezellenmodul zerstört werden. Daher ist es notwendig, dass bei der Fertigung von Batteriezellenmodulen zwischen den Batteriezellen ein vorbestimmter Abstand eingehalten wird, welcher sich an der erwarteten thermischen Ausdehnung der einzelnen Batteriezellen orientiert. Gleichzeitig ist es aufgrund von Leistungsanforderungen beziehungsweise von einem steigenden Bedarf an Energiespeicherkapazität einerseits und einem nur limitiert zur Verfügung stehenden Platzangebot in elektrisch betriebenen Fahrzeugen notwendig, so viele Zellen wie möglich auf engem Raum unterzubringen. Ferner ist ein stetiges Ziel von Weiterentwicklungen im Fahrzeugbereich, Material und Gewicht einzusparen, um Kosten zu sparen und die Energieeffizienz zu steigern.

Nachteilig ist dabei, dass sowohl für die Herstellung der Batteriemodule, insbesondere für die Positionierung der Batteriezellen, als auch zum räumlichen Trennen der Batteriezellen voneinander, zusätzliche Elemente zur Separierung der Batteriezellen voneinander notwendig sind, welche die Module unnötig aufwendig machen und zu erhöhten Herstellungskosten führen und sich gleichzeitig negativ auf die mögliche Packungsdichte der Batteriezellen auswirken.

Der vorliegenden Erfindung liegt daher die Aufgabe zugrunde, die Nachteile des Standes der Technik zu überwinden, insbesondere ein Batteriezellenmakromodulgehäuse für den Einsatz in einem elektrisch betriebenen Fahrzeug dahingehend zu verbessern, dass dieses bei einer besonders kompakten und materialsparenden Bauweise Spannungen aufgrund thermischer Ausdehnungen vermeiden kann.

Erfindungsgemäß wird diese Aufgabe mit den Merkmalen des unabhängigen Anspruchs 1 gelöst.

Weitere vorteilhafte Ausgestaltungen sind in den Unteransprüchen angegeben.

Die Gehäuseschale kann vorzugsweise eine Höhe aufweisen, die im Wesentlichen der Höhe der aufzunehmenden Batteriezellen entspricht.

Die Trennelemente können insbesondere Rippen sein, die sich von der Gehäuseoberseite hin zur Gehäuseunterseite oder umgekehrt senkrecht zur Durchtrittsebene entlang der Wände zumindest abschnittsweise erstrecken. Die Trennelemente erstrecken sich dabei insbesondere zwischen den angrenzenden Profilen der Positioniereinbuchtungen und weisen gehäuseinnenraumseitig eine Dicke auf, welche den Abstand benachbarter Positioniereinbuchtungen bestimmt. Insbesondere können die Trennelemente gleich weit in den Innenraum hineinragen wie die Außenseiten der Positioniereinbuchtungen. Vorzugsweise ragen die Trennelemente an den stirnseitigen Wänden weiter in den Innenraum als an den längsseitigen Wänden. Die Trennelemente können jedoch auch längsseitig und stirnseitig gleich weit in den Innenraum hineinragen. Die Positioniereinbuchtungen in den längsseitigen Wänden weisen vorzugsweise alle die gleiche Tiefe auf. Die Positioniereinbuchtungen in den stirnseitigen Wänden weisen vorzugsweise ebenfalls die gleiche Tiefe auf. Die Tiefe der Positioniereinbuchtungen der stirnseitigen Wände und die der längsseitigen Wände kann sich unterscheiden, vorzugsweise ist die Tiefe der stirnseitigen Positioniereinbuchtungen größer als die der längsseitigen.

Es kann vorgesehen sein, dass die längsseitigen Wände jeweils dieselbe geradzahlige Anzahl an Positioniereinbuchtungen aufweisen und die stirnseitigen Wände jeweils eine um den Wert eins abweichende Anzahl an Positioniereinbuchtungen aufweisen. Die geradzahlige Anzahl an Positioniereinbuchtungen in den längsseitgen Wänden ergibt sich daraus, dass die in das Gehäuse einzusetztenden Mikromodule in Längsrichtung jeweils aus einem Batteriezellenpaar gebildet sind, welches jeweils aus zwei nebeneinanderliegenden Batteriezellen besteht. Die Differenz von einer Positioniereinbuchtung zwischen beiden stirnseitigen Wänden resultiert daraus, dass eine ungerade Batteriezellenanzahl in stirnseitiger Richtung, sprich eine ungerade Anzahl an Batteriezellenpaaren, besonders gut herstellbar ist. Entlang der längsseitigen Wände können Batteriezellen jeweils nur an den Positioniereinbuchtungen mit der Gehäuseschale in Berührkontakt stehen. Entlang der stirnseitigen Wände können Batteriezellen sowohl mit den Positioniereinbuchtungen als auch mit den zwischen den Positioniereinbuchtungen befindlichen Trennelementen mit der Gehäuseschale in Berührkontakt stehen. Dies folgt insbesondere aus der speziellen Anordnung der Batteriezellen, die durch die Geometrie der Gehäuseschale vorgegeben ist. Dabei bestehen die in der Gehäuseschale aufnehmbaren Mikromodule jeweils aus einer Mehrzahl an Batteriezellenpaaren, die sich in stirnseitiger Richtung versetzt zueinander in zickzackförmigem Verlauf erstrecken. Durch diese Anordnung wird erreicht, dass die Längsachsen aller unmittelbar benachbarten zylindrischen Batteriezellen, die alle denselben Zelldurchmesser aufweisen, jeweils denselben Abstand aufweisen. Benachbarte Batteriezellen bilden dadurch jeweils die Außenkanten gleichseitiger Dreiecke. Aus dem Versatz der Batteriezellenpaare zueinander folgt, dass die außen liegenden Batteriezellen der der stirnseitigen Gehäusewand näheren Batteriezellenpaare der stirnseitig an der Gehäusewand anliegenden Mikromodule jeweils in einer Positioniereinbuchtung aufgenommen sind. Demgegenüber liegen die außen liegenden Batteriezellen der der stirnseitigen Gehäusewand weiter entfernten Batteriezellenpaare der stirnseitig an der Gehäusewand anliegenden Mikromodule jeweils an einem Trennelement zwischen zwei Positioniereinbuchtungen an.

Ferner kann eine der stirnseitigen Wände bevorzugt zumindest drei Positioniereinbuchtungen aufweisen und die andere stirnseitige Wand zumindest vier, besonders bevorzugt fünf beziehungsweise sechs Positioniereinbuchtungen. Bei drei oder mehr an einer Wand anliegenden Batteriezellen folgt für das Batteriezellenmodul die Konsequenz, dass nicht alle Batteriezellen wandseitig anliegen und über eine Positioniereinbuchtung oder ein Trennelement positioniert oder zumindest teilfixiert werden können, sondern zusätzlich im von den Gehäusewänden umschlossenen Innenraum Batteriezellen aufgenommen sind, die jeweils nur von weiteren angrenzenden Batteriezellen umgeben sind und dementsprechend von diesen abgestützt werden müssen, um den einzuhaltenden Abstand zwischen den Batteriezellenaußenseiten zu realisieren. Beim vorliegenden Batteriezellenmodul kann bedingt durch die Ausbildung der Mikromodule durch Batteriezellenpaare die Gesamtanzahl der Batteriezellen nur eine geradzahlige Anzahl sein.

Insbesondere kann der Abstand der Positioniereinbuchtungen in den stirnseitigen Wänden um den Faktor 2/√3 größer sein als der Abstand der Positioniereinbuchtungen in den längsseitigen Wänden. Die Positioniereinbuchtungen in den längsseitigen Wänden können jeweils einen Abstand zueinander aufweisen, welcher größer ist als die Außendurchmesser der Batteriezellen. Dieser Abstand ist insbesondere der Batteriezellendurchmesser plus einen Sicherheitswert, in welchem ein Ausdehnen der Zellen im Betrieb durch Temperatureinwirkung sowie ein Ausdehnen der Zellen über ihre Betriebsdauer berücksichtigt ist, außerdem ein Toleranzbeiwert. Dadurch, dass alle im Modul aufgenommenen Batteriezellen denselben Abstand zu benachbarten Zellen aufweisen und somit die Zelllängsachsen jeweils Außenkanten gleichseitiger Dreiecke bilden, folgt für den Abstand der Positioniereinbuchtungen an den stirnseitigen Wänden, dass dieser dem Abstand zweier Batteriezellenpaare entspricht, zwischen welchen ein dazu versetztes Batteriezellenpaar angeordnet ist, welches demzufolge nicht an einer Positioniereinbuchtung, sondern an dem dazwischen befindlichen Trennelement anliegt. Der Abstand zweier benachbarter Batteriezellen in stirnseitiger Richtung entspricht dem Abstand zweier Batteriezellen in längsseitiger Richtung geteilt durch √3. Somit entspricht der Abstand zweier stirnseitiger Positioniereinbuchtungen dem Abstand zweier Batteriezellen in längsseitiger Richtung multipliziert mit 2/√3.

Außerdem können die Positioniereinbuchtungen Halbschalen mit einem Krümmungsradius aufweisen, der dem Krümmungsradius der zylindrischen Batteriezellen entspricht, wobei der Abstand zwischen den längsseitigen Halbschalen größer als der zweifache Krümmungsradius ist.

Die Platten des die Gehäuseschale verschließenden Deckels können aufeinander geklebt oder miteinander verschraubt sein. Die Platten können an das Gehäuse geklebt oder mit diesem verschraubt sein. Hierzu kann die Gehäuseschale gehäuseoberseitig und gehäuseunterseitig jeweils Sacklochbohrungen aufweisen, welche im umlaufenden Rand eingebracht sind. Die äußere Platte dient sowohl der mechanischen Stabilisierung des Moduls und der im Gehäuse aufgenommenen Mikromodule als auch dem effektiven Wärmeabtransport. Die Platte zur Modulinnenseite ist als sogenannter Gapfiller ausgeführt, welcher aus einem elektrisch nichtleitenden Material besteht. Dadurch wird sichergestellt, dass die Modulaußenseite elektrisch vom Modulinnenraum abgeschirmt ist. Vorzugsweise weist auch die Innenplatte eine hohe Wärmeleitfähigkeit auf, um effektiv Wärme aus dem Modulinnenraum nach außen abzuleiten.

Die Sollbruchflächen können der Batteriezellform entsprechend insbesondere kreisförmig ausgebildet sein. Die Vorprägung kann vorsehen, dass die Sollbruchflächen Bereiche mit verringerter Materialstärke sind. Alternativ kann die Vorprägung vorsehen, dass die Sollbruchflächen jeweils von Perforationsnähten umschlossen sind.

Insbesondere können die Durchmesser der Sollbruchflächen kleiner sein als die Außendurchmesser der Batteriezellen. Wichtig ist, dass der Durchmesser der Ausgasschlote kleiner ist, als der Außendurchmesser der Zellen, aber größer als die Ausgaskappe der Zelle, damit ein Aufklappen der Zelle und das Ausströmen der heißen Gase begünstigt wird.

Darüber hinaus kann eine der längsseitigen Wände in Längsrichtung an der Gehäuseober- oder -unterseite eine Längsnut zur Aufnahme einer Platine aufweisen, wobei sich ausgehend von der Längsnut mehrere voneinander beabstandete Durchgangsöffnungen parallel zu den Positioniereinbuchtungen jeweils fluchtend mit einem der innenseitigen Trennelemente durch die längsseitige Wand erstrecken. Die Längsnut ist vorzugsweise jeweils zur Gehäuseoberseite oder -unterseite offen, damit eine Platine aus entsprechender Richtung, also senkrecht zur Durchtrittsebene, in die Nut eingeschoben werden kann. Die Längsnut kann sich vorzugsweise fast durch die gesamte Längswand erstrecken und sich zumindest zwischen den außenliegenden Trennelementen erstrecken. Die Längsnut weist vorzugsweise eine Höhe zwischen einem Viertel und einem Drittel der Gehäuseschalenhöhe auf. Die Durchgangsöffnungen können sich durch die gesamte Gehäuseschale erstrecken. Die Anzahl der Durchgangsöffnungen in der entsprechenden Längswand kann vorzugsweise sieben betragen. Es kann insbesondere vorgesehen sein, dass auf Höhe jedes vierten Trennelements eine Durchgangsöffnung angeordnet ist. Vorzugsweise erfolgt ein Abgriff an jedem zweiten Batteriezellenpaar. Vorzugsweise weisen die äußersten Batteriezellenpaare jeweils einen Zwischenabgriff auf.

Dabei kann die Längsnut in eine der stirnseitigen Wände münden und im Mündungsbereich eine Ausnehmung zur Aufnahme eine Platinenanschlussbuchse aufweisen. Die Ausnehmung kann insbesondere quaderförmig sein und eine ausreichende Größe zur Aufnahme einer 12-poligen Platinenanschlussbuchse aufweisen. Die Ausnehmung ist vorzugsweise wie die Längsnut zur Gehäuseoberseite oder -unterseite offen, damit die Platine samt Anschlussbuchse in die Längsnut und die Ausnehmung eingeschoben werden kann.

Die Trennelemente, denen eine der Durchgangsöffnungen fluchtend zugeordnet ist, können außerdem jeweils gehäuseober- und -unterseitig senkrecht zur längsseitigen Wandebene verlaufende Nuten aufweisen, wobei jeweils eine erste der Nuten in die Längsnut und jeweils eine zweite der Nuten in die zugeordnete Durchgangsöffnung mündet. Die Nuten sind jeweils zur Gehäuseoberseite beziehungsweise -unterseite offen. Die Breite der Nuten hängt von der Breite der Trennelemente ab, die Nuten sind dabei nicht breiter als das in den Innenraum ragende Endstück der Trennelemente. Die Nuten weisen jeweils eine derartige Tiefe auf, dass ein durch die Nut geführter Zwischenabgriff so auf ein Kontaktblech trifft, dass dieser darauf fixiert werden kann.

Das Batteriezellenmakromodulgehäuse kann ferner eine Platine umfassen, die in der Längsnut angeordnet ist und eine Mehrzahl von jeweils durch die Durchgangsöffnungen reichende, mit der Platine elektrisch verbundene Arme aufweist. Die Platine weist vorzugsweise einen den Abmessungen der Längsnut entsprechenden Platinenkörper auf, der sich dementsprechend hauptsächlich in Richtung der Längsnut erstreckt. Die Arme erstrecken sich vorzugsweise in regelmäßigen Abständen senkrecht zur Haupterstreckungsrichtung vom Platinenkörper weg. Dabei kann die Platine ferner gehäuseoberseitig und die Arme gehäuseunterseitig abgekantete Zwischenabgriffe aufweisen, welche sich durch senkrecht zur längsseitigen Wandebene verlaufenden Nuten erstrecken und jeweils mit elektrischen Verbindungselementen zwischen zwei an die Nuten angrenzenden Batteriezellen in Berührkontakt stehen.

Insbesondere können die Zwischenabgriffe auf den elektrischen Verbindungselementen angeschweißt oder angelötet sein. Die elektrischen Verbindungselemente können insbesondere Kontaktbleche sein, welche jeweils die beiden Batteriezellen eines Batteriezellenpaars verbinden. Die Kontaktbleche verbinden jeweils die Minuspole und jeweils die Pluspole beider Batteriezellen und sind vorzugsweise zentriert auf den Zellen an diesen befestigt. Die Zwischenabgriffe erfolgen vorzugsweise mittig zwischen den Batteriezellen auf dem jeweiligen Kontaktblech.

Zur Überwachung der Batteriezellmodulparameter können die Zwischenabgriffe jeweils zumindest einen Sensor zum Erfassen von Temperaturwerten und Zellspannungen aufweisen. Die Zwischenabgriffe können aus Blechabschnitten gebildet sein.

Außerdem kann die Platine eine an der Platine befestigte Anschlussbuchse aufweisen, die in der stirnseitigen Ausnehmung aufgenommen ist. Die Anschlussbuchse ist dabei entsprechend an einem Außenbereich des Platinenkörpers so befestigt, dass der Buchsenkörper in Haupterstreckungsrichtung der Platine über das Platinenende hinausragt.

Eine der stirnseitigen Wände kann außenseitig an der Gehäuseoberseite und die andere der stirnseitigen Wände kann außenseitig an der Gehäuseunterseite jeweils einen eine Stufe ausbildenden Rücksprung aufweisen. Dadurch weisen beide Stirnseiten der Gehäuseschale einen um 180 Grad verdreht zueinander angeordneten Rücksprung auf. Alle weiteren stirnseitig angeordneten Gehäuseelemente können darüber hinaus entsprechend ebenfalls um 180 Grad zueinander auf dem jeweiligen Stirnseiten angebracht sein, so wie beispielsweise die Längsnut mitsamt der Ausnehmung. Der Rücksprung zeichnet sich durch eine gegenüber einer ebenen stirnseitigen Wand stufenförmige Wand aus, wenn man den Querschnitt der stirnseitigen Wand betrachtet. Dadurch können die stirnseitigen Wände jeweils eine nahezu über die gesamte Wandbreite verlaufende Kante aufweisen. Die Kante kann sich mit gegenüber der Gehäuseoberseite beziehungsweise der Gehäuseunterseite wechselnder Tiefe durch die jeweilige Wand erstrecken. Der Profilverlauf des Rücksprungs ist in der Draufsicht insbesondere T-förmig. Der Rücksprung kann sich mit einer Stufentiefe von 1mm bis 1cm in die Wanddicke hineinerstrecken.

Dabei kann sich der Rücksprung mit einer von der Gehäuseober- oder -unterseite her gesehen ersten Tiefe über eine erste Breite der stirnseitigen Wand erstrecken, wobei die erste Breite mit der Anzahl an Trennelementen auf der Innenseite der stirnseitigen Wand korrespondiert, wobei der Rücksprung in einem Mittenbereich der Wand einen Abschnitt mit vergrößerter Tiefe aufweisen kann, dessen Breite im Wesentlichen der Abmessung der vergrößerten Tiefe entspricht. Dadurch kann der Rücksprung ein T-förmiges Profil mit zwei seitlichen an der jeweiligen Gehäuseseite entlanglaufenden Armen und einem mittigen, tiefer in die Gehäusehöhe hineinragenden Mittenbereich aufweisen, wobei das Profil zur jeweiligen Gehäuseseite, je nachdem, welcher Seite die Arme zugewandt sind, offen ist. Der Mittenbereich kann insbesondere quadratisch sein und eine Breite von 0,5 bis 5 cm aufweisen, wobei die Differenz zwischen der vergrößerten Tiefe und der ersten Tiefe der Breite des Mittenbereichs entsprechen kann. Der Rücksprung kann an den Außenseiten der Arme des T-Profils zur jeweiligen Gehäuseseite hin auslaufen.

Dabei können die an den Rücksprung angrenzenden Trennelemente jeweils zur Gehäuseoberseite beziehungsweise zur Gehäuseunterseite offene Aussparungen aufweisen, welche jeweils senkrecht zu den stirnseitigen Wandebenen verlaufen. Die Aussparungen können dabei maximal eine Breite aufweisen, die der der zugehörigen Trennelemente entspricht. Die Aussparungen können sich insbesondere durch die gesamte Wandstärke, das heißt, zwischen Gehäuseinnenraum und Gehäuseaußenseite erstrecken.

Ferner können die Aussparungen im Querschnitt durch die stirnseitigen Wände einen rechteckigen Verlauf aufweisen, so dass sich in der Draufsicht auf die jeweilige Wand jeweils eine Zinnenstruktur ergibt.

Insbesondere kann an den Außenseiten der stirnseitigen Wände jeweils eine Mehrzahl an Rastelementen angeordnet sein. Dabei kann jedes Rastelement aus zwei Rasthaken bestehen, welche jeweils einen sich von der stirnseitigen Wand wegerstreckenden Distanzabschnitt sowie einen parallel zur stirnseitigen Wand verlaufenden Rastabschnitt aufweisen, wobei sich der Rastabschnitt am von der Wand entfernten Ende des Distanzabschnitts vom Distanzabschnitt wegerstreckt. Die Rasthaken können parallel nebeneinander angeordnet sein. Die Rastabschnitte können insbesondere voneinander wegweisen. Die Rastelemente können insbesondere symmetrisch auf der jeweiligen stirnseitigen Wand angeordnet sein. Insbesondere können jeweils mehrere Rastelemente untereinander angeordnet sein. Vorzugsweise kann jede stirnseitige Wand vier Rastelemente aufweisen.

Die Erfindung betrifft ferner ein Batteriezellenmakromodul mit einer Mehrzahl an Batteriezellenmikromodulen, die in einem wie oben beschriebenen Batteriezellenmakromodulgehäuse aufgenommen sein können, wobei jedes Batteriezellenmikromodul aus einer Mehrzahl parallel zueinander ausgerichteter zylindrischer Batteriezellen gebildet sein kann, welche durch jeweils ein an den Oberseiten und an den Unterseiten der Zellen angeschweißtes Verbindungsblech auf einem vordefinierten Abstand zueinander fixiert und elektrisch kontaktiert sind.

Dabei kann jedes Batteriezellenmikromodul eine Mehrzahl von Batteriezellenpaaren mit jeweils zwei parallel nebeneinander angeordneten Batteriezellen umfassen, wobei die Batteriezellenpaare in einer sich parallel zu den stirnseitigen Wänden erstreckenden Reihe zickzackförmig paarweise versetzt zueinander angeordnet sein können, so dass alle unmittelbar benachbarten Batteriezellen eines Batteriezellenmikromoduls im Wesentlichen denselben Abstand zueinander aufweisen.

Insbesondere können die Batteriezellenmikromodule parallel nebeneinander in der Gehäuseschale angeordnet sein und die außen liegenden Batteriezellen jeweils an jeweils einer der Positioniereinbuchtungen der stirnseitigen oder der längsseitigen Wände anliegen. Bevorzugt können die Batteriezellenmikromodule über zumindest ein Fixierungsmittel in der Durchtrittsebene relativ zueinander fixiert sein, so dass der Abstand zwischen allen unmittelbar benachbarten Batteriezellen aneinander grenzender Batteriezellenmikromodule im Wesentlichen dem Batteriezellenabstand der Batteriezellenmikromodule entspricht.

Die Batteriezellenmodule können zur Realisierung einer Reihenschaltung insbesondere alternierend in der Gehäuseschale angeordnet sein, so dass abwechselnd die Pluspolseite und die Minuspolseite der Module nebeneinanderliegen.

Das Fixierungsmittel kann dabei elektrisch leitende Mikromodulverbinder umfassen, die auf den Oberseiten beziehungsweise Unterseiten benachbarter Batteriezellenmikromodule fixiert sind und diese verbindet, so dass diese kontaktiert und in Reihe geschaltet sind.

Das Fixierungsmittel kann ferner elektrisch nichtleitende Mikromodulverbinder umfassen, welche an den Verbindungsblechen fixiert sind, die nicht im Zuge der Reihenschaltung miteinander verbunden sind. Dadurch kann gewährleistet werden, dass jedes in der Gehäuseschale aufgenommene Mikromodul mit jeweils beiden benachbarten Mikromodulen oberseitig und unterseitig mechanisch verbunden ist und dadurch alle Module in der Gehäuseschale einerseits fixiert sind und andererseits auf einem vorbestimmten Abstand zueinander gehalten werden, so dass keine Batteriezellen mit ihren Außenseiten unmittelbar in Berührkontakt stehen.

Die Verbindungsbleche können jeweils Kontaktbleche aufweisen, welche jeweils die Batteriezellen der Batteriezellenpaare mechanisch starr und elektrisch miteinander verbinden. Die Kontaktbleche können dabei endseitig jeweils im Mittenbereich der Batteriezellen an diese angeschweißt sein. Die Verbindungsbleche können ferner jeweils die Kontaktbleche verbindende Kontaktblechverbinder aufweisen, welche der Anordnung der Batteriezellenpaare zueinander entsprechend entlang des Batteriezellenmikromoduls einen zickzackförmigen Verlauf aufweisen können. Die Kontaktbleche und die Kontaktblechverbinder können miteinander zu einem Verbindungsblech verschweißt sein. Die Kontaktbleche und die Kontaktblechverbinder können auch einstückig ein Verbindungsblech ausbilden. Die Kontaktbleche können jeweils endseitig zumindest einen schlitzförmigen Durchbruch aufweisen, der im Wesentlichen jeweils mit den Längsachsen der Batteriezellen fluchtet. Die Kontaktblechverbinder können ebenfalls diese schlitzförmigen Durchbrüche aufweisen, welche jeweils im Wesentlichen mittig zwischen benachbarten Batteriezellenpaaren angeordnet sind. Die schlitzförmigen Durchbrüche können mittig jeweils eine Aufweitung aufweisen, welche das Einstecken von entsprechenden Gegenelementen erleichtern. Die schlitzförmigen Durchbrüche können insbesondere parallel zu den stirnseitigen Wänden der Gehäuseschale angeordnet sein.

Ferner kann das Fixierungsmittel elektrisch leitende Mikromodulverbinder umfassen, die auf den leitenden Oberseiten beziehungsweise Unterseiten benachbarter Batteriezellenmikromodule fixiert sind und diese verbindet, so dass diese kontaktiert und in Reihe geschaltet sind. Die Mikromodulverbinder können eine Mehrzahl an Verbindungsabschnitten aufweisen, welche jeweils an definierten Abschnitten benachbarter Verbindungsbleche von benachbarten Batteriezellenmikromodulen fixiert sind. Die Mikromodulverbinder können ferner einen die Verbindungsabschnitte verbindenden Mittelsteg aufweisen, welcher im Wesentlichen senkrecht zu den Verbindungsabschnitten angeordnet ist. Der Mittelsteg kann einen geraden Verlauf aufweisen, so dass die Endabschnitte der davon abgehenden gleichförmig ausgebildeten Verbindungsabschnitte ebenfalls linear zueinander ausgerichtet sind. Alternativ kann der Mikromodulverbinder durch ein rechteckiges Blech realisiert sein, dessen Außenabmessungen so bemessen sind, dass die Außenkanten des Blechs jeweils auf den Ober- oder Unterseiten benachbarter Batteriezellen befestigbar sind. Der Mittelsteg kann auch einen zickzackförmigen Verlauf aufweisen, welcher dem Versatz benachbarter Batteriezellenpaare folgt, so dass die außenseitigen Endabschnitte der gleichförmigen Verbindungsabschnitte ebenfalls jeweils zickzackförmig in stirnseitiger Richtung verlaufen. Der Mikromodulverbinder kann in diesem Fall auch alternativ als einteiliges zickzackförmiges Blech ausgebildet sein. Sofern der Mikromodulverbinder zickzackförmig verläuft, ist er bevorzugt mit den Verbindungsabschnitten jeweils auf den auf den Ober- oder Unterseiten benachbarter Batteriezellen fixierter Verbindungsblechabschnitte befestigt. Ist der Mikromodulverbinder geradlinig ausgeführt, ist er mit den Verbindungsabschnitten jeweils auf den die Batteriezellenpaare verbindenden Kontaktblechverbindern vorzugsweise mittig fixiert, da die Mittelpunkte der Kontaktblechverbinder auch bei zickzackförmigem Versatz der Batteriezellenpaare zueinander linear zueinander ausgerichtet sind. Alle Mikromodulverbinderformen können sowohl leitend als auch nichtleitend ausgeführt sein.

Die Verbindungsabschnitte können zum Fixieren der Mikromodulverbinder an ihren außenseitigen Endabschnitten jeweils abgekantete Laschen aufweisen, die zum Eingreifen in die schlitzförmigen Nuten der Verbindungsbleche ausgebildet sind. Die abgekanteten Laschen können abgerundete Ecken aufweisen, welche neben den Aufweitungen in den schlitzförmigen Durchbrüchen ein Einstecken in die schlitzförmigen Nuten erleichtern.

Alternativ oder zusätzlich können die Mikromodulverbinder mit den jeweiligen Verbindungsblechen verschweißt werden.

Das Fixierungsmittel kann auch einen Füllkleber umfassen, welcher zwischen den Batteriezellen in der Gehäuseschale eingebracht ist. Dabei kann auf sämtliche nichtleitenden Mikromodulverbinder verzichtet werden, während die leitenden Mikromodulverbinder abwechselnd zwischen den Oberseiten und zwischen den Unterseiten benachbarter Mikromodule verlaufen.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Figur 1a/b: eine perspektivische Darstellung einer Gehäuseschale sowie eine Draufsicht auf eine stirnseitige Wand der Gehäuseschale;
- Figur 2a/b/c: eine Darstellung eines Zellverbinders für ein Mikromodul sowie jeweils eine obere und eine untere Ansicht eines mittels eines Zellverbinders verbundenen Mikromoduls;
- Figur 3a/b/c/d: perspektivische Darstellungen von Mikromodulverbindern, eine gerade Ausführungsform und eine zickzackförmige Ausführungsform;
- Figur 4a/b/c: eine Draufsicht auf eine Platine mit Platinenanschlussbuchse, Querschnitt durch eine Gehäuseschale im Bereich einer Durchgangsöffnung mit eingesetzter Platine, eine perspektivische Darstellung einer Platine mit abgekanteten Zwischenabnehmern;
- Figur 5a/b/c: ein perspektivische Darstellung eines Leistungsverbinders, eine Frontalansicht sowie eine Draufsicht eines Leistungsverbinders;
- Figur 6a/b: eine Draufsicht auf eine Steckhülse, eine perspektivische Darstellung einer Steckhülse;
- Figur ya/b/c: eine perspektivische Darstellung eines Leistungssteckers, eine perspektivische Darstellung eines Leistungssteckers mit eingesetztem Kontaktclip, eine perspektivische Darstellung eines Kontaktclips;
- Figur 8a/b/c: eine perspektivische Darstellung eines Gehäusedeckels, eine Frontalansicht sowie eine Rückansicht eines Gehäusedeckels;
- Figur 9a/b: eine perspektivische Teildarstellung eines Batteriezellenmakromoduls ohne aufgesetzten Gehäusedeckel, eine perspektivische Teildarstellung eines Batteriezellenmakromoduls mit aufgesetztem Gehäusedeckel;
- Figur 10a/b: perspektivische Darstellungen der Deckelinnenplatte/Deckelaußenplatte;
- Figur na/b/c: eine perspektivische Darstellung einer Gehäuseschale mit aufgesetztem Deckel mit perforierten Sollbruchflächen, eine Querschnittsansicht eines Batteriezellenmakromoduls im Falle einer Ausgasung, eine perspektivische Ansicht von Batteriezellen im Falle einer Ausgasung;
- Figur 12: eine perspektivische Darstellung eines Batteriezellenmakromoduls ohne Gehäuseschale.

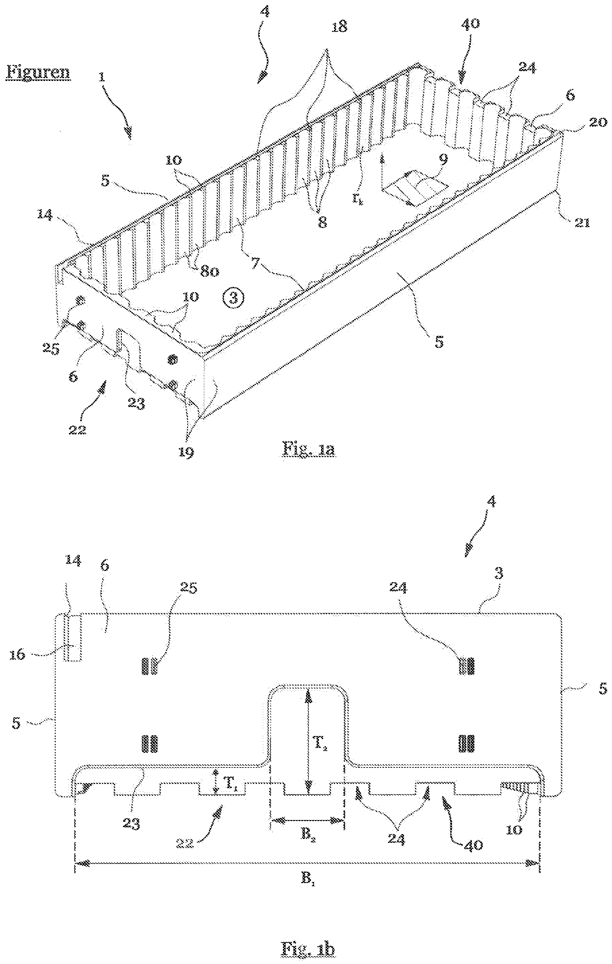

Figur 1 zeigt die Gehäuseschale 4 des Batteriezellenmakromoduls 1 mit jeweils parallel beabstandeten längsseitigen Wänden 5 und stirnseitigen Wänden 6, welche den Innenraum 3 umschließen. An den Innenseiten 7 der Wände sind jeweils Positioniereinbuchtungen 8 angeordnet, die sich senkrecht zur Durchtrittsebene 9 erstrecken und welche als Halbschalen 80 ausgebildet sind und auf den längsseitigen Wänden 5 einerseits und den stirnseitigen Wänden 6 andererseits jeweils in regelmäßigen Abständen angeordnet sind. Die Abstände der Positioniereinbuchtungen 8 auf den stirnseitigen Wänden 6 sind dabei größer als die der Positioniereinbuchtungen 8 auf den längsseitigen Wänden. Die Abstände werden durch rippenförmige Trennelemente 10 realisiert, welche entsprechend auf den stirnseitigen Wänden 6 eine größere Dicke als auf den längsseitigen Wänden aufweisen. Die Halbschalen 80 reichen in der gezeigten Ausführungsform jeweils von der Gehäuseoberseite 20 bis zur Gehäuseunterseite 21. Eine Längsnut 14 erstreckt sich parallel zu den längsseitigen Wänden 5 durch die obere längsseitige Wand 5, welche in Figur 1a dargestellt ist und in die Ausnehmung 16 in der unteren stirnseitigen Wand 6 mündet, wobei die Längsnut 14 sich bis zum letzten Trennelement 10 vor der gegenüberliegenden Wand 6 erstreckt, jedoch nicht in diese gegenüberliegende Wand 6 mündet. Die Längsnut 14 dient zum Einstecken einer Platine 34, welche mittels in regelmäßigen Abständen angeordneten Zwischenabgriffen 38 Zellspannungen und Temperaturwerte der Batteriezellen 2 abgreift, diese verarbeitet und beispielsweise an ein übergeordnetes Batteriemanagementsystem (BMS) weiterleitet. Die Zwischenabgriffe 38 der Platine 34 sind dabei durch Nuten 18 geführt, welche sich senkrecht zu der längsseitigen Wand 5, in welcher die Platine 34 aufgenommen ist, durch die Trennelemente 10 erstrecken. Man sieht, dass an jedem vierten Trennelement 10 eine entsprechende 18 Nut durchgeführt ist. Als Reaktion auf die erfassten Werte kann das Batteriezellenmakromodul 1 mit entsprechenden Befehlen angesteuert werden. Es ist ferner zu erkennen, dass auf der sichtbaren Außenseite 19 der stirnseitigen Wand 6 vier Rastelemente 25 symmetrisch angeordnet sind und an der Gehäuseunterseite 21 ein Rücksprung 22 mit einer stufenförmigen Kante 22 ausgebildet ist, wobei der Rücksprung eine erste Breite B₁ aufweist, mit welcher sich der Rücksprung 22 mit einer Tiefe T₁ ausgehend von der Gehäuseunterseite 21 über die stirnseitige Wand 6 erstreckt. Im mittleren Bereich des Rücksprungs 22 weist dieser über eine Breite von B₂ eine gegenüber die erste Tiefe T₁ vergrößerte Tiefe T₂ auf. Auf den an den Rücksprung 22 angrenzenden Trennelementen 10 ist zu erkennen, dass jeweils senkrecht zu der stirnseitigen Wand 6 ausgebildete Aussparungen 24 mit rechteckigem Querschnitt eingebracht sind, welche mit den dazwischenliegenden Positioniereinbuchtungen 8 eine Zinnenstruktur 40 ergeben. Es ist ferner zu erkennen, dass die Gehäuseschale einen weitestgehend symmetrischenAufbau aufweist, da die auf den stirnseitigen Wänden 6 angeordneten Elemente wie die Rastelemente 25, der Rücksprung 22 mit stufenförmiger Kante 23 und die Zinnenstruktur 40 auf der Außenseite 19 der jeweils gegenüberliegenden stirnseitigen Wand 6 um 180 Grad verdreht dazu ausgebildet sind, so dass ein Rücksprung 22 zur Gehäuseunterseite 21 offen ist und der andere zur Gehäuseoberseite 20. Die Gehäuseschale 4 weist jeweils auf ihren durch die vier Wände 5, 6 gebildeten umlaufenden Kanten auf der Gehäuseoberseite 20 sowie auf der Gehäuseunterseite 21 definierte Schnittstellen auf, um die Deckelplatten 11, 12, 13 anzubinden. Die umlaufenden Kanten an Gehäuseober- und -unterseite weisen ferner Dichtflächen auf, um das Batteriezellenmakromodul 26 gegenüber äußeren Einflüssen abzuschirmen.

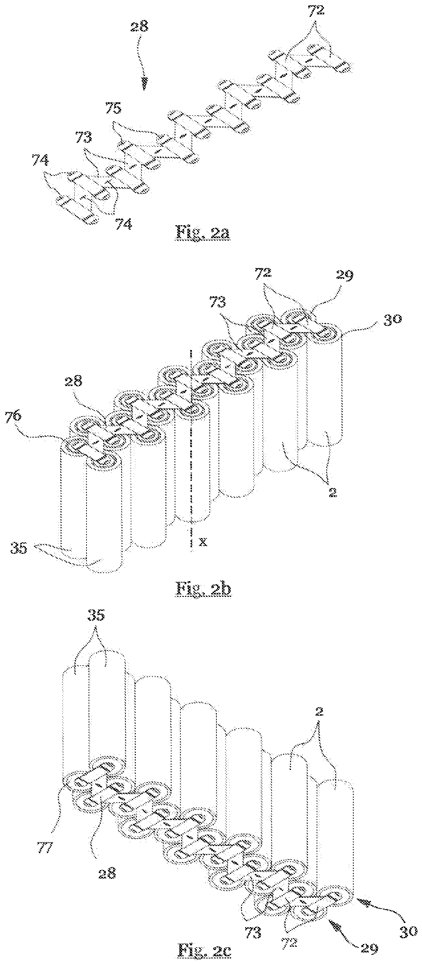

In Figur 2 ist ein im Makromodulgehäuse 1 aufnehmbares Batteriezellenmikromodul 27 dargestellt. Figur 2a zeigt einen Zellverbinder 28 zum Verbinden der Batteriezellen 2 untereinander, welcher aus einer Mehrzahl an Kontaktblechen 72 gebildet ist, welche mittels Kontaktblechverbindern 73 untereinander verbunden sind. Die Außenseiten der Kontaktbleche weisen jeweils schlitzförmige Durchbrüche 74 auf, welche zudem in der Mitte des Durchbruchs 74 jeweils eine kreisförmige Aufweitung 75 aufweisen, welche ein Einstecken von komplementären Gegenelementen erleichtert. Die Kontaktbleche 72 und die Kontaktblechverbinder 73 sind so angeordnet, dass die Kontaktbleche 72 parallel zueinander ausgerichtet sind und durch die zickzackförmig verlaufenden Kontaktblechverbinder 73 jeweils abwechselnd einen Versatz nach rechts oder links aufweisen, wobei der Versatz gleichbleibend alterniert. Dadurch sind jeweils alle übernächsten Kontaktbleche 72 in einem geradlinigen Verlauf zueinander ausgerichtet, so dass sich zwei parallele Reihen an Kontaktblechen 72 ergeben. Der Zellverbinder 28 hat zwei Aufgaben. Eine besteht darin, die Batteriezellen 2 relativ zueinander zu fixieren. Die andere Aufgabe besteht darin, die Batteriezellen 2 darüber hinaus auf einem vorbestimmten Abstand dzueinander zu fixieren, so dass kein Berührkontakt zwischen den Außenflächen der Batteriezellen 2 besteht.

Die Figuren 2b und 2c zeigen jeweils ein Mikromodul 27 von oben (2b) und von unten (2c), wobei in Figur 2b die Pluspolseite sichtbar und in Figur 2c die Minuspolseite sichtbar ist. Beide Seiten sind jeweils durch einen Zellverbinder 28 gemäß Figur 2a verbunden. Das Mikromodul besteht aus einer Mehrzahl an zylindrischen Batteriezellen 2 mit parallel ausgerichteten Längsachsen X, welche jeweils paarweise in Form von Batteriezellenpaaren 35 über jeweils ein Kontaktblech 72 miteinander verbunden sind, wobei die Kontaktbleche an die jeweiligen Seiten (Pluspol 76, Minuspol 77) angeschweißt sind. Durch den zickzackförmigen Versatz des Zellverbinders 28 weisen die Batteriezellenpaare 35 des Mikromoduls 27 ebenfalls einen entsprechenden Versatz zueinander auf, so dass die Batteriezellen 2 bei möglichst dichter Packung alle dieselbe Distanz zueinander aufweisen. So ergeben sich in der Hauptausbreitungsrichtung des Mikromoduls zwei parallele Reihen 29, 30 von Batteriezellen, die sich nebeneinander zickzackförmig erstrecken. Der Zellverbinder 28 ist dabei so dimensioniert, dass zwischen allen Zellaußenseiten ein Freiraum verbleibt, so dass zwischen allen benachbarten Batteriezellen 2 kein Berührkontakt besteht.

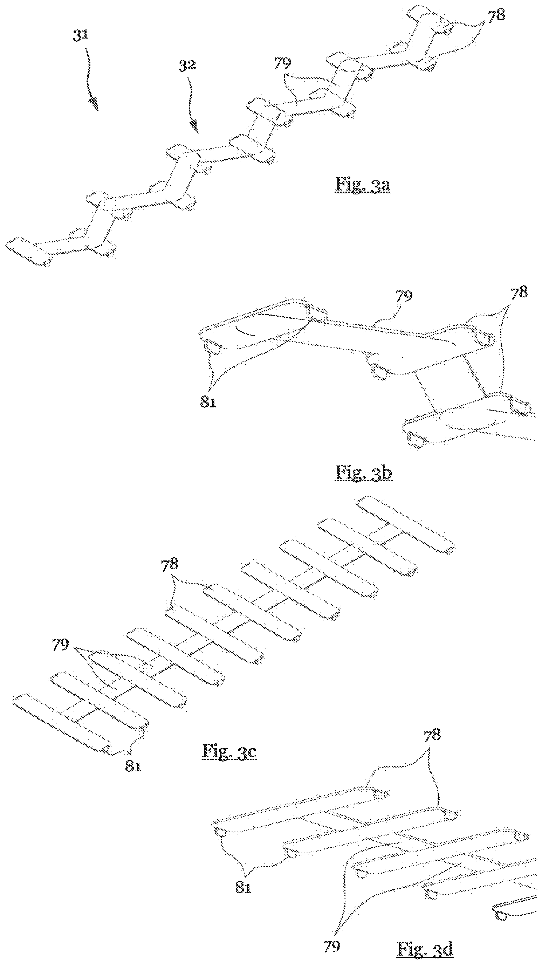

Die Mikromodule 27 können in der Gehäuseschale 4 untereinander fixiert, beziehungsweise mit definiertem Abstand zueinander über die Mikromodulverbinder 32 positioniert werden. Figur 3 zeigt zwei unterschiedliche Ausführungsformen des Mikromodulverbinders 32, eine zickzackförmige Version, dargestellt in den Figuren 3a und 3b, sowie eine geradlinige Version, dargestellt in den Figuren 3c und 3d. Der Mikromodulverbinder 32 weist dabei einen Mittesteg 79 auf, von dem sich eine Mehrzahl an Verbindungsabschnitten 78 in regelmäßigen Abständen wegerstreckt, wobei die Abstände dem Abstand zweier Batteriezellenpaare 35 innerhalb eines Mikromoduls 28 entsprechen. An den gegenüberliegenden Enden der Verbindungsabschnitte 78 sind jeweils abgekantete Laschen 81 angeordnet, welche zum Einstecken in die schlitzförmigen Durchbrüche 74 in den Kontaktblechen 72 oder den Kontaktblechverbindern 73 ausgebildet sind. Die Verbindungsabschnitte 78 weisen alle jeweils dieselbe Länge auf, wobei die Verbindungsabschnitte 78 der geradlinigen Ausführungsform des Mikromodulverbinders 32 länger sind als die des zickzackförmigen Mikromodulverbinders. Dies liegt daran, dass die Verbindungsabschnitte 78 der geradlinigen Ausführungsform des Mikromodulverbinders 32 zum Einstecken in die in den Kontaktblechverbindern 73 angeordneten schlitzförmigen Durchbrüche 74 vorgesehen sind, während demgegenüber die Verbindungsabschnitte 78 der zickzackförmigen Ausführungsform des Mikromodulverbinders 32 zum Einstecken in die Durchbrüche 74 in den Kontaktblechen 72 vorgesehen sind. Da die Abstände zwischen benachbarten Batteriezellen 2 und darauf befestigten Kontaktblechendabschnitten zweier benachbarter Mikromodule 27 geringer ist als der Abstand zweier Kontaktblechverbinder 73 zweier benachbarter Mikromodule 27, müssen die Verbindungsabschnitte 78 der geradlinigen Ausführungsform des Mikromodulverbinders 32 dementsprechend länger sein als die Verbindungsabschnitte 78 der zickzackförmigen Ausführungsform des Mikromodulverbinders 32. Zwischen den Batteriezellen 2 zweier benachbarter Mikromodule 28 ist derselbe Abstand d vorgesehen wie zwischen zwei Batteriezellen 2 desselben Mikromoduls 28. Der jeweils mittig fluchtend mit den Längsachsen X der zu verbindenden Batteriezellen 2 zu befestigende Verbindungsabschnitt 78 der zickzackförmigen Ausführungsform des Mikromodulverbinders 32 weist daher eine Länge auf, die dem Zelldurchmesser der Batteriezellen 2 plus dem vorzusehenden Abstand d zwischen den Batteriezellen 2 auf. Der jeweils an den Kontaktblechverbindern 73 zu befestigende Verbindungsabschnitt 78 der geradlinigen Ausführungsform des Mikromodulverbinders 32 weist demgegenüber eine Länge von zwei Zelldurchmessern plus zweimal dem vorzusehenden Abstand d zwischen den Batteriezellen 2 auf. Dementsprechend ergibt sich ein Verhältnis der Länge der Verbindungsabschnitte 78 beider Ausführungsformen des Mikromodulverbinders 32 von 1 zu 2.

Über die Aufweitung 75 in Form einer aufgeweiteten Nut in den Kontaktblechen 72 und den Kontaktblechverbindern 73 ist ein Finden und Positionieren der Laschen 81 der Mikromodulverbinder 32 über die entsprechend geformte Lasche 81 möglich.

Die Nutform setzt sich aus einer geraden Nut beziehungsweise dem schlitzförmigen Durchbruch 74 mit einem kreisförmigen Ausschnitt beziehungsweise der Aufweitung 75 zusammen

Der schlitzförmige Durchbruch 74 sowie die Aufweitung 75 sind dabei verrundet, somit wird ein einfaches Finden und Ineinandergleiten von Zellverbinder 28 und Mikromodulverbinder 32 gewährleistet. Beide Ausführungsformen des Mikromodulverbinders 32 können wahlweise entweder elektrisch leitfähig oder elektrisch isolierend ausgeführt sein.

Alternative Beabstandung beziehungsweise eine Positionierung der Mikromodule 28 durch einen Füllkleber zwischen den Mikromodulen 28 ist ebenfalls möglich. Dabei werden mittels leitender Mikromodulverbinder 32 nur jene Mikromodulpole 28 miteinander verbunden, welche zur Kontaktierung der Reihenschaltung der Mikromodule 28 benötigt werden, während die übrigen Mikromodulpole unverbunden bleiben. Die weitere Positionierung und Fixierung der Mikromodule 28 relativ zueinander erfolgt dann über einen Füllkleber, welcher zwischen die einzelnen Batteriezellen 2 im Makromodulgehäuse 1 eingebracht wird und dort aushärtet. Vorzugsweise weist dieser Füllkleber eine hohe Wärmeleitfähigkeit auf, um Wärme effektiv aus dem Gehäuseinnenraum 3 abtransportieren zu können.

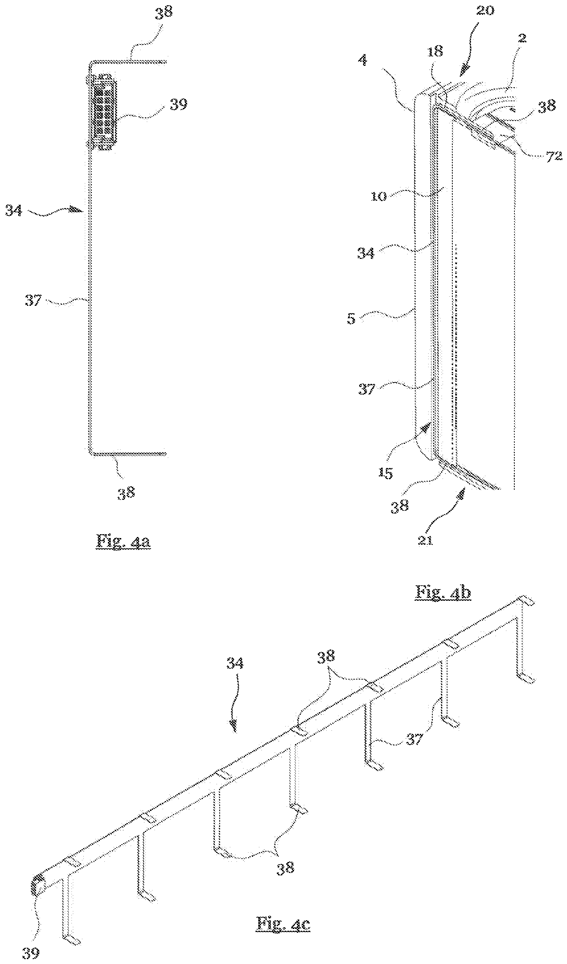

In den Figuren 4a-c ist die BMS-Platine 34 dargestellt, welche zum Einsetzen in die Längsnut 14 in der Gehäuseschale 4 ausgebildet ist. Dazu weist die Platine 34 einen länglichen Platinenkörper auf, der an die Form der Längsnut 14 angepasst ist, sowie mehrere sich davon wegerstreckende Arme 37, beispielsweise sieben wie dargestellt. An der Oberseite der Platine 34, welche in Richtung der Gehäuseoberseite 20 weist, sowie jeweils an den Enden der Arme 37 weist die Platine Zwischenabgriffe 38 auf, die im rechten Winkel in Richtung Gehäuseinnenraum 3 abgekantet sind. Die Zwischenabgriffe 38 an Oberseite und Unterseite der Platine 34 fluchten jeweils miteinander. Somit weist die dargestellte Platine 34 vierzehn Zwischenabgriffe 38 auf. Die Zwischenabgriffe 38 sind in regelmäßigen Abständen angeordnet, so dass ein Abgriff an jeder vierten Trennwand 10 der Gehäuseschale 4 erfolgen kann. Endseitig schließt der Platinenkörper mit dem letzten Zwischenabgriff bündig ab, Frontseitig weist der Platinenkörper ein Überhangsstück auf, an welchem eine Platinenanschlussbuchse 39 zum Gehäuseinnenraum 3 weisend an der Platine 34 befestigt ist. Figur 4b zeigt eine Querschnittsansicht durch eine längsseitige Wand 5 einer in eine Gehäuseschale 4 eingesetzten Platine 34 und insbesondere durch eine Durchgangsöffnung 15, durch welche ein Arm 37 verläuft. Es lässt sich erkennen, dass die Zwischenabgriffe 38 jeweils auf Höhe der Oberseite und der Unterseite der angrenzenden Batteriezelle 2 abgekantet sind und jeweils mit einem Kontaktblech 72, das zwei Batteriezellen 2 eines Batteriezellenpaars 35 verbindet, in Verbindung stehen. Ferner ist zu erkennen, dass die Zwischenabgriffe 38 durch Nuten 18 geführt sind, welche senkrecht zur längsseitigen Wand 5 in die entsprechenden Trennelemente 10 eingebracht sind. Zwischen den Zwischenabgriffen 38 und der Platine 34 beziehungsweise den Armen 37 können definierte Knickstellen zur genauen Lageausrichtung der Zwischenspannungsabgriffe 38 angeordnet sein.

Die Platine 34 kann als integraler Bestandteil des Batteriemoduls 26 ausgeführt sein.

Die Platine 34 kann als Leitungsstrang zur Kontaktierung der Mikromodule 28 über Zwischenabgriffe 38 ausgeführt sein, wobei die Übergabe der Messspannungen an übergeordnete Slaves über die Platinenanschlussbuchse 39 und ein daran angeschlossenes Adapterkabel erfolgt, das durch den Durchbruch 67 im Gehäusedeckel 61 geführt wird.

Die Zwischenabgriffe 38 können insbesondere zum Erfassen von Zellspannungen und Temperaturen ausgebildet sein.

Die Platine 34 kann alternativ als BMS Slave ausgeführt sein, wobei in diesem Fall die Integration der Slavekomponenten wie Mikrokontroller, Widerstände, Multiplexer etc. auf dem Platinenkörper erfolgt.

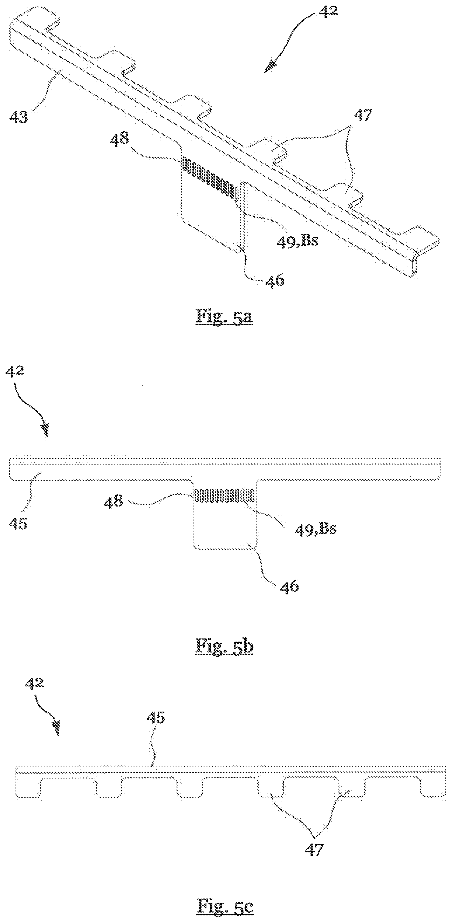

Figur 5a-c zeigt drei Ansichten eines Leistungsverbinders 42, welcher Teil der Kontaktiervorrichtung 41 ist und eine elektrische Verbindung zwischen Gehäuseinnenraum 3 und Gehäuseaußenseite herstellt, genauer gesagt zwischen dem an die zugeordnete stirnseitige Wand 6 anliegenden Mikromodul 27 und der Steckhülse 43. Der Leistungsverbinder 42 weist eine an den Rücksprung 23 in der Gehäuseschale 4 angepasste T-förmige Ausgestaltung auf, wobei der Rücksprung 23 eine Anlagefläche für den Leistungsverbinder 42 aufweist. Dazu besteht der Leistungsverbinder 42 aus einer Kontaktschiene 43, an welche sich auf der einen Seite in gleicher Ebene eine Kontaktlasche 46 anschließt und auf der anderen Seite und davon in Richtung Gehäuseinnenraum 3 abgekantet mehrere Kontaktfinger 47. Am oberen Ende der Kontaktlasche 46 ist eine Schmelzsicherung 48 integriert, welche durch mehrere parallele Stege 49 mit einer jeweiligen Stegbreite B_{S} gebildet ist, wobei zwischen allen Stegen 49 ein vordefinierter Abstand vorgesehen ist. Über diese Parameter kann das Durchbrennverhalten beziehungsweise der Überlaststrom eingestellt werden, ab welchem die Schmelzsicherung schmilzt und den elektrischen Kontakt unterbricht. Die Schmelzsicherung 48 kann aus demselben Material hergestellt sein wie der restliche Leistungsverbinder 42. Über die symmetrische Ausbildung der Gehäuseschale 4 kann eine symmetrische Stromabnahme auf beiden Seiten des Moduls 26 über jeweils eine Kontaktiervorrichtung 41 erfolgen.

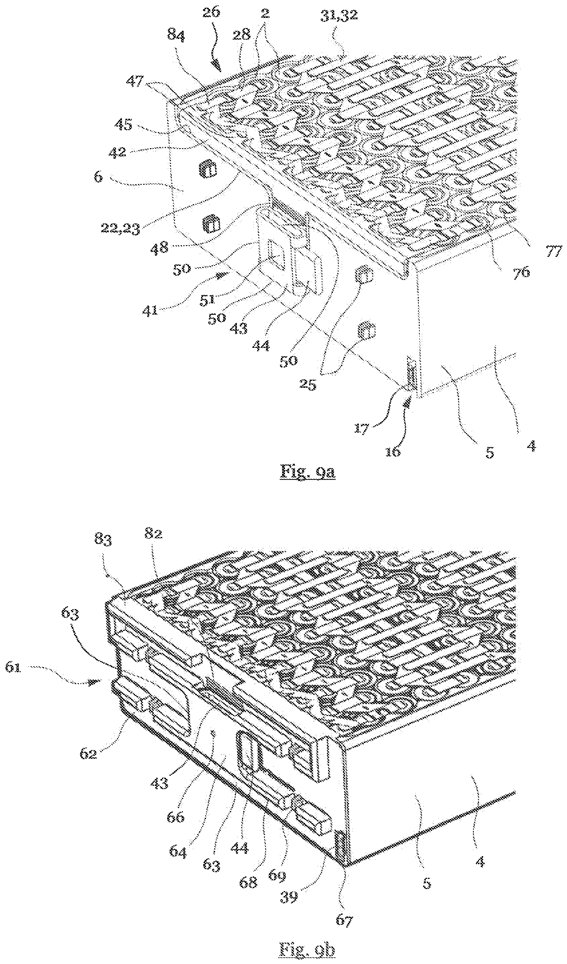

Die Kontaktfinger 47 greifen im montierten Zustand durch die Aussparungen 24 in Gehäuseschale 4 und Kontaktieren über einen Mikromodulverbinder 32 die außen liegende Batteriezellreihe, wie in Figur 9a dargestellt. Ferner wird die Kontaktlasche 46 an die Rückseite von der Steckhülse 43 geschweißt, wobei der Leistungsverbinder 42, die Steckhülse 43 sowie der Gehäusedeckel 61 als vormontiertes Teil bereitgestellt werden können.

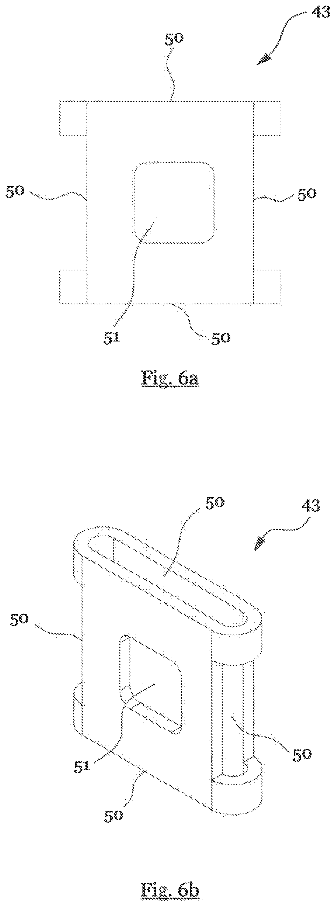

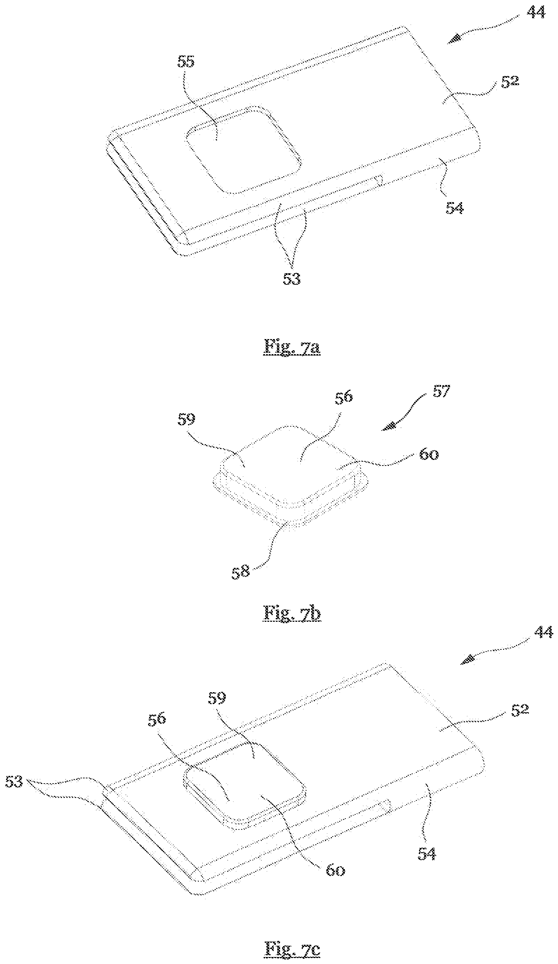

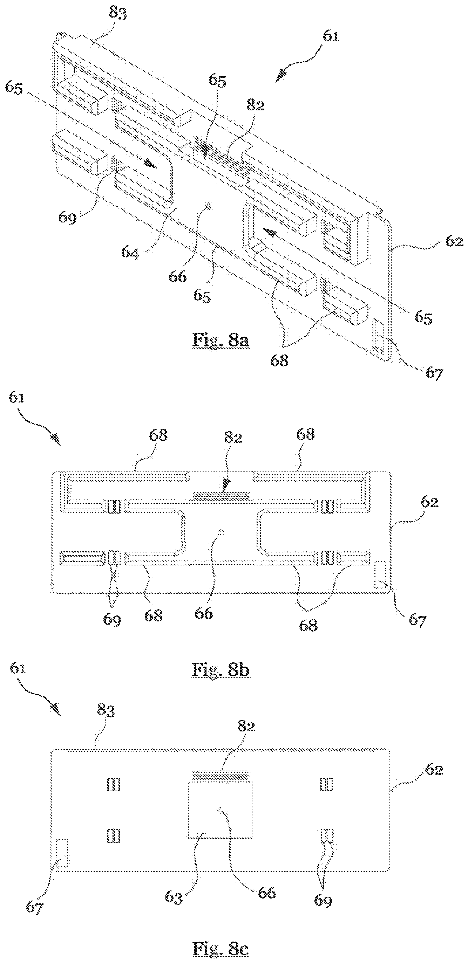

Die in Figur 6 dargestellte flache rohrförmige Steckhülse 43 weist zwei parallele Wände auf und bietet vier mögliche seitliche Einschubrichtungen für den Leistungsstecker 44. Hierzu sind seitlich Teilstücke der die das Rohr abschließenden Rohrabschnitte jeweils einer Einschuböffnungsabmessung entsprechend herausgebrochen. Im dargestellten Beispiel liegen die Einschubrichtungen parallel zur Ebene der stirnseitigen Wand 6, an welcher die Kontaktiervorrichtung 41 befestigt ist. Die vier Einschubrichtungen stehen senkrecht zueinander. Dabei ist die Dachstruktur 64 auf dem Gehäusedeckel 61 entsprechend ausgebildet, wie in Figur 8 zu erkennen ist. Die vier Einschuböffnungen 50 weisen alle denselben Querschnitt auf. Die Steckhülse 43 umfasst außerdem einen Hülsendurchbruch 51, in welchen der in Figur 7 dargestellte Clip 57 einrasten kann. Dementsprechend weisen Hülsendurchbruch 51 und Clip 57 korrespondierende Abmessungen auf.

Figur 7a-c zeigt die Elemente eines Leistungssteckers 44, welcher in eine der Einschuböffnungen 50 der Steckhülse 43 einsteckbar ist. Der Leistungsstecker 44 umfasst ein Steckerelement 52, das einen Halteabschnitt 54 aufweist, von welchem sich zwei Steckplatten 53 parallel voneinander beabstandet wegerstrecken. Die Steckplatten 53 sind federnd ausgeführt, so dass diese auseinandergebogen oder zusammengedrückt werden können und beim Loslassen in ihre ursprüngliche Form zurückkehren. In einer der Steckplatten 53 ist ein Clipdurchbruch 55 eingebracht, welcher eine Durchgangsöffnung ist. Die Abmessungen des Clipdurchbruchs 55 korrespondieren mit denen eines Clips 57, welcher ein weiteres Element des Leistungssteckers 44 ist. Wie dargestellt können Clipdurchbruch 55 und Clip 57 einen quadratischen Querschnitt mit abgerundeten Ecken aufweisen, alternativ können beide Elemente einen runden Querschnitt aufweisen. Die Dicke des Clips 57 ist größer als der Abstand der beabstandeten Steckplatten 53, damit dieser nicht aus dem Leistungsstecker 44 herausfallen kann. Der Clip weist einen oberen Clipabschnitt 56, welcher geringere Abmessungen als der Clipdurchbruch 55 aufweist und im eingesteckten Zustand durch diesen hindurchragt. In einem unteren Bereich weist der Clip 57 eine umlaufende Kante 58 auf, welche so bemessen ist, dass diese den Clipdurchbruch 55 hintergreift und somit ein Herausrutschen des Clips 57 aus dem Clipdurchbruch 55 verhindert. Die Clipoberseite 59 weist eine farbliche Markierung auf, mittels welcher ein Überprüfen eines korrekten Einsteckens des Leistungssteckers 44 in die Steckhülse 43 erleichtert wird. Hierzu weist die Dachstruktur 64 eine Durchgangsbohrung 66 auf, durch welche die Clipoberseite 59 im korrekt eingesteckten Zustand sichtbar ist. Figur 7c zeigt einen Leistungsstecker 44 mit eingestecktem Clip 57. Das Einclipsen des Leistungssteckers 44 in die Steckhülse 43 erfolgt durch Einschieben des Leistungssteckers 44 in eine der Einschuböffnungen 50 der Steckhülse 43, so dass der Clip in den mittig angeordneten symmetrischen Hülsendurchbruch 51 durch Federkraft einhakt, wie in Figur 9a sichtbar ist.

In Figur 8 ist der Gehäusedeckel 61 dargestellt, welcher zum Verschließen des Gehäuses 1 an den stirnseitigen Wänden 6 ausgebildet ist. Dabei kann für beide stirnseitigen Wände 6 dieselbe Deckelvariante verwendet werden, da die positive und die negative Seite des Gehäuses 4 symmetrisch aufgebaut sind. Der Gehäusedeckel 61 weist eine Deckelplatte 62 auf, welche bei auf die Gehäuseschale 4 aufgesetztem Deckel 61 an der jeweiligen stirnseitigen Wand 6 anliegt. In der Rückansicht in Figur 8c ist erkennbar, dass die Deckelplatte 62 mittig angeordnet eine Durchgangsöffnung 63 aufweist, welche mit den Abmessungen der Steckhülse 43 so abgestimmt ist, dass die Steckhülse durch die Durchgangsöffnung 63 durchsteckbar ist. Eine Dachstruktur 64 erstreckt sich auf der Vorderseite des Gehäusedeckels 61 wie in Figur 8a dargestellt über die Durchgangsöffnung 63, so dass frontseitig ein Berührschutz gegenüber der Kontaktiervorrichtung 41 besteht. Die Dachstruktur 64 verläuft parallel zur Deckelplatte 62 mit einem Abstand zu dieser, der zumindest der Höhe der Steckhülse 43 entspricht, so dass diese vollständig unter der Dachstruktur 64 aufnehmbar ist. Die Dachstruktur 64 weist korrespondierend mit der Steckhülse 43 angeordnete Dachöffnungen 65 auf, durch welche der Leistungsstecker 44 aus unterschiedlichen Richtungen in die Einschuböffnungen 50 Steckhülse eingeschoben werden kann. Die Dachstruktur wird wie in Figur 8a und 8b dargestellt von H-förmig angeordneten Versteifungsrippen 68 getragen, welche auf der Deckelplatte 62 angeordnet sind. Die dargestellte Deckelplatte 62 weist zusätzlich noch weitere Versteifungsrippen 68 auf, welche jedoch alle so angeordnet sind, dass diese ein Einschieben des Leistungssteckers 44 in eine der Einschuböffnungen 50, 65 nicht behindern. Ferner befinden sich die Versteifungsrippen 68 nicht im Bereich senkrecht und waagerecht zum Durchbruch 67, welcher mit der Ausnehmung 16 in der Gehäuseschale 4 fluchtet, damit in diesen Bereichen Platz zum Entlangführen von Anschlusskabeln verbleibt, welche in die in der Ausnehmung 16 angeordnete und zum Durchbruch 67 weisende Platinenanschlussbuchse 39 einsteckbar sind. Die Dachstruktur 64 kann eine Durchgangsbohrung 66 aufweisen, welche mit dem darunter befindlichen Clip 57 fluchtet, so dass bei korrekt eingestecktem Leistungsstecker 44 der Clip 57 durch die Durchgangsbohrung 66 sichtbar ist. Die Durchgangsbohrung 66 dient ferner dem Zweck, einen eingeclipsten Leistungsstecker 44 wieder lösen zu können, indem mit einem spitzen Gegenstand der Clip 57 in die Steckhülse 43 gedrückt wird, so dass der Leistungsstecker 44 entfernt werden kann. Oberhalb der Dachstruktur 64 weist die Deckelplatte 62 ein Sichtfenster 82 auf, welches durch waagerecht angeordnete Schlitze gebildet ist und welches mit der darunter angeordneten und von der Deckelplatte 62 abgedeckten Schmelzsicherung 48 fluchtet, so dass von der Gehäuseaußenseite überprüft werden kann, ob die Schmelzsicherung 48 noch intakt ist. Die Schlitze sind jeweils so schmal ausgeführt, dass nicht mit einem Finger durch diese hindurchgegriffen werden kann. Ferner sind die Schlitze senkrecht zu den Stegen 49 der Schmelzsicherung 48 angeordnet, damit die Schmelzsicherung 48 besonders einfach überprüft werden kann. Der Gehäusedeckel 61 kann am oberen Ende der Deckelplatte 62 ferner eine Abkantung 83 aufweisen, welche sich bei aufgesetztem Deckel 62 auf die jeweilige stirnseitige Wand 6 über die Kontaktfinger 47 erstreckt und dadurch einen Berührschutz darstellt. Zum Fixieren des Gehäusedeckels 61 an den stirnseitigen Wänden 6 weist die Deckelplatte 62 korrespondierend mit den Rastelementen 25 entsprechende Rastdurchbrüche 69 auf, welche von den Rastabschnitten 71 der Rastelemente 25 hintergriffen werden können, um den Gehäusedeckel 61 zu fixieren. Die Breite der Rastdurchbrüche 69 ist dabei größer als die der Rastabschnitte 71, damit diese durch die Rastdurchbrüche 69 hindurchgesteckt werden können.

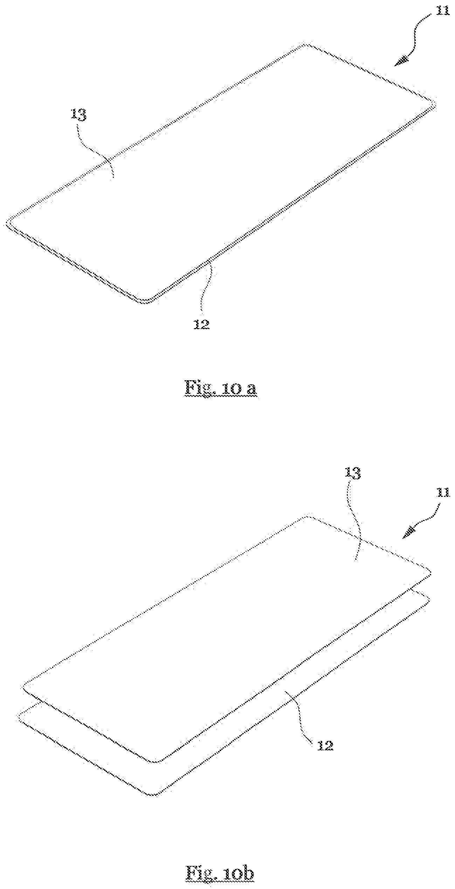

Figur 9a zeigt einen Ausschnitt eines Batteriezellenmakromoduls 26, wobei in der Gehäuseschale 4 mehrere Mikromodule 27 aufgenommen sind, welche abwechselnd mit ihren Pluspolen 76 und ihren Minuspolen 77 zur Gehäuseoberseite 20 hinweisen. Die Batteriezellen 2 der Mikromodule 27 sind mittels Zellverbindern 28 aneinander gekoppelt und dadurch relativ zueinander auf den vorbestimmten Abstand d fixiert und positioniert. Untereinander sind die Mikromodule 27 zur Realisierung der Reihenschaltung über Mikromodulverbinder 27 aneinander gekoppelt und elektrisch verbunden. Das dargestellte Mikromodul 27, das an der stirnseitigen Wand 6 anliegt, ist dabei über einen Kontaktverbinder 84 an die Kontaktfinger 47 des Leistungsverbinders 42 gekoppelt, wobei pro Batteriezellenpaar 35 ein Kontaktfinger 47 vorgesehen ist. Der Kontaktverbinder 84 weist einen zickzackförmigen Verlauf auf und wird an der einen Seite über Kontaktabschnitte an die in zickzackförmiger Anordnung zueinander ausgerichteten äußeren Batteriezellen 2 des äußersten Mikromoduls 27 angebunden. Wandseitig weisen die Kontaktabschnitte einen geradlinigen Verlauf auf, um die Kontaktabschnitte des Kontaktverbinders 84 an die geradlinig ausgerichteten Kontaktfinger 47 anzubinden. Es ist erkennbar, dass der Leistungsverbinder 42 im Rücksprung 22 aufgenommen ist und an parallel zur stirnseitigen Gehäusewand 6 an diesem anliegt. Die Steckhülse 43 ist an die Kontaktlasche 46 des Leistungsverbinders 42 angeschweißt. Beispielhaft ist der Leistungsstecker 44 von rechts in die rechte Einschuböffnung 50 der Steckhülse eingeschoben und mit dem Clip 57 im Hülsendurchbruch 51 eingerastet. Zu Anschauungszwecken ist in Figur 9a das Modul 26 ohne aufgesetzten Gehäusedeckel 61 dargestellt, damit die Kontaktiervorrichtung 41 sichtbar wird, in Betrieb genommen wird das Modul 1 jedoch nur, solange die Gehäusedeckel 61 sowie die Deckel 11 auf Oberseite 20 und Unterseite 21 des Gehäuses 1 fixiert sind. Es ist ferner erkennbar, dass eine Platine 34 in die Längsnut 14 eingesetzt ist und die daran befestigte Platinenanschlussbuchse 39 in der Ausnehmung 16 aufgenommen ist, so dass ein Stecker durch den Durchbruch 67 in diese einsteckbar ist. Figur 9b zeigt das Batteriezellenmakromodul 26 mit aufgesetztem Deckel 61 und eingestecktem Leistungsstecker 44, welcher in eine der Einschuböffnungen 50 der Steckhülse und durch die entsprechende Dachöffnung 65 in der Dachstruktur des Gehäusedeckels 61 eingesteckt ist. Die Gehäuseober- und -unterseite wird jeweils durch zwei übereinanderliegenden Platten 12, 13 realisiert, wie in Figur 10 dargestellt, wobei die Außenplatte 13 auf den Modulaußenseiten aus einem metallischen Werkstoff oder Kunststoff gefertigt wird. Die äußere Platte 13 dient der mechanischen Stabilisierung des Moduls 26 und der Mikromodule 27 als auch dem effektiven Wärmeabtransport. Die Platte 12 zur Modulinnenseite ist als sogenannter Gapfiller ausgeführt, welcher nichtleitend ist. Dadurch wird sichergestellt, dass der Berührschutz der aktiven Teile gegeben ist sowie der Wärmetransfer von den Zell- und Mikromodulverbindern erleichtert wird. Ferner erfahren die Mikromodule 27 eine Klemmung und weitere Positionierung in Richtung der Längsachsen X der Batteriezellen 2. Außerdem wird der Vibrationseintrag auf die Mikromodule 27 gedämpft. Die Platten 11 können mittels Schraubverbindungen oder Klebverbindungen an der Gehäuseschale befestigt werden.

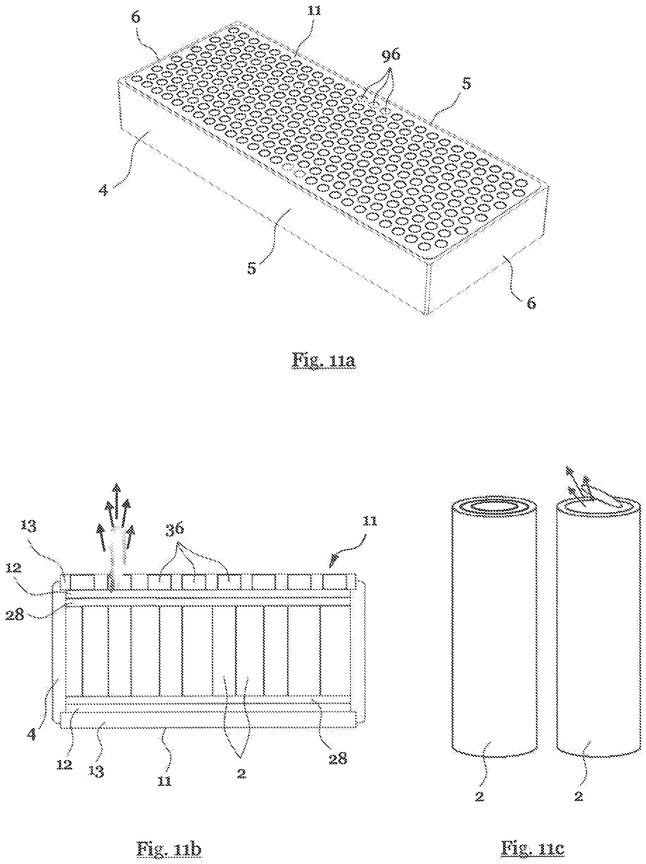

Wie in Figur 11a dargestellt, können die Platten perforierte Sollbruchflächen 36, sog. "Schlote" aufweisen, die im Falle eines Zellevents (Ausgasen) Sollbruchstellen darstellen, um die Gase schnell ableiten zu können. Diese sind vorzugsweise jeweils mittig überjeder Batteriezelle 2 angeordnet. Die Modulober- und -unterseiten 20, 21 können flächig an Kühlplatten angebunden werden, für einen guten Wärmeabtransport sind die Innenplatten 12 elektrisch isolierend und wärmeleitend, die Außenplatten 13 wärmeleitend ausgeführt. Figur 11b zeigt einen Querschnitt durch ein Batteriezellenmakromodul 26 während eines Ausgasprozesses. Durch Fehlfunktion hervorgerufenes Ausgasen einer oder mehrerer Zellen 2 verbiegen die heißen Gase den Zellverbinder 28, welcher so ausgelegt ist, dass ein Verbiegen möglich ist, aber trotzdem die mechanische Integrität gewährleistet ist Die heißen Gase durchschlagen anschließend die Innenplatte 12 und Strömen durch die Öffnung des Gehäusedeckels 11 aus dem Modul 27. Der Vorteil dabei ist, dass im normalen Betrieb die Wärme aus den Zellen über die Innenplatte 12 abgeführt werden und an das Gehäuse abgegeben werden kann. Im Fehlerfall durchstoßen die heißen Gase die Innenplatte 12 über der ausgasenden Zelle, so dass die heißen Gase aus dem Modul abgeleitet werden können Dabei kann über jeder Zelle die Abdeckplatte 13 gelocht sein, wie in Figur 11a dargestellt. Dabei ist wichtig, dass der Durchmesser der Ausgasschlote kleiner ist, als der Außendurchmesser der Zellen 2, aber größer als die Ausgaskappe der Zelle 2, damit ein Aufklappen der Zelle und das Ausströmen der heißen Gase begünstigt wird.

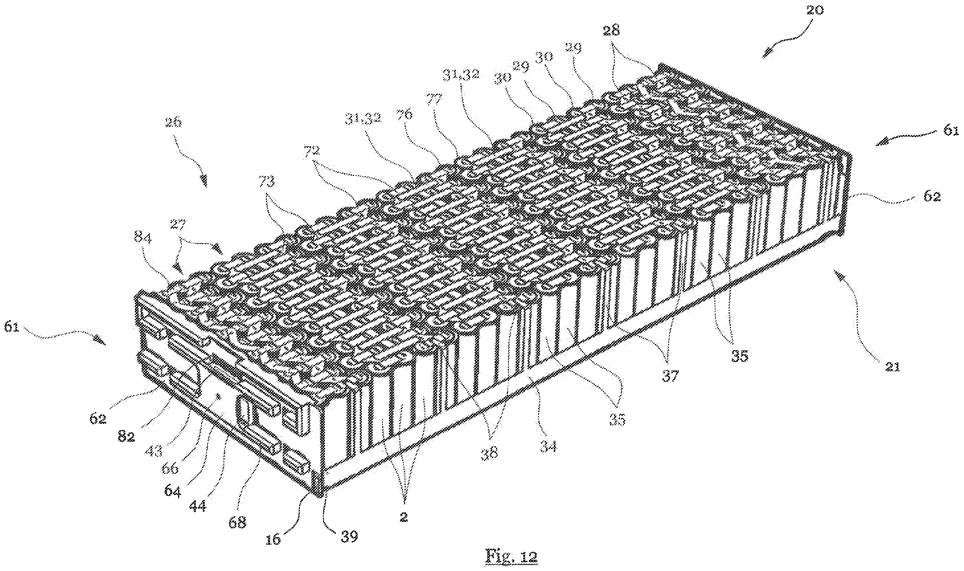

Figur 12 zeigt eine Gesamtansicht des Batteriezellenmakromoduls 26, wobei die Gehäuseschale 4 sowie die Deckel 11 zu Anschauungszwecken nicht dargestellt sind. Insbesondere ist die Mehrzahl an in Reihe geschalteten Mikromodule 27 zu erkennen sowie die im unteren Bereich der sichtbaren längsseitigen Modulseite die Platine 34 mit davon abgehenden Armen 37 und den abgekanteten Zwischenabgriffen 38, welche jeweils in Kontakt mit Kontaktblechen 72 zwischen Batteriezellenpaaren 35 stehen, wobei der Abgriff an jedem zweiten Batteriezellenpaar 35 entlang der Längsseite erfolgt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, innerhalb des Umfangs der beiliegenden Ansprüche.

### Bezugszeichenliste

- 1: Batteriezellenmakromodulgehäuse
- 2: Batteriezelle
- 3: Innenraum
- 4: Gehäuseschale
- 5: Längsseitige Wand
- 6: Stirnseitige Wand
- 7: Innenseiten der Wände
- 8: Positioniereinbuchtung
- 9: Durchtrittsebene
- 10: Trennelement
- 11: Deckel
- 12: Innenplatte
- 13: Außenplatte
- 14: Längsnut
- 15: Durchgangsöffnung
- 16: Ausnehmung
- 17: Platinenanschlussstecker
- 18: Nut
- 19: Außenseiten der Wände
- 20: Gehäuseoberseite
- 21: Gehäuseunterseite
- 22: Rücksprung
- 23: Stufe
- 24: Aussparung
- 25: Rastelement
- 26: Batteriezellenmakromodul
- 27: Batteriezellenmikromodul
- 28: Verbindungsblech
- 29: Erste Batteriezellenreihe
- 30: Zweite Batteriezellenreihe
- 31: Fixierungsmittel
- 32: Mikromodulverbinder (32a, 32b)
- 33: Füllkleber
- 34: Platine
- 35: Batteriezellenpaar
- 36: Perforierte Sollbruchfläche
- 37: Arm
- 38: Zwischenabgriff
- 39: Platinenanschlussbuchse
- 40: Zinnenstruktur
- 41: Kontaktiervorrichtung
- 42: Leistungsverbinder
- 43: Steckhülse
- 44: Leistungsstecker
- 45: Kontaktschiene
- 46: Kontaktlasche
- 47: Kontaktfinger
- 48: Schmelzsicherung
- 49: Steg
- 50: Öffnung
- 51: Hülsendurchbruch
- 52: Steckerelement
- 53: Steckplatte
- 54: Halteabschnitt
- 55: Clipdurchbruch
- 56: Clipabschnitt
- 57: Clip
- 58: Umlaufende Kante
- 59: Clipoberseite
- 60: Farbliche Markierung
- 61: Gehäusedeckel
- 62: Deckelplatte
- 63: Durchgangsöffnung
- 64: Dachstruktur
- 65: Dachöffnungen
- 66: Durchgangsbohrung
- 67: Durchbruch
- 68: Versteifungsrippe
- 69: Rastdurchbruch
- 70: Rasthaken
- 71: Rastabschnitt
- 72: Kontaktblech
- 73: Kontaktblechverbinder
- 74: Schlitzförmiger Durchbruch
- 75: Aufweitung
- 76: Pluspol
- 77: Minuspol
- 78: Verbindungsabschnitt
- 79: Mittelsteg
- 80: Halbschale
- 81: Abgekantete Lasche
- 82: Sichtfenster
- 83: Abgekanteter Steg
- 84: Kontaktverbinder

- T₁: Erste Tiefe
- B₁: Erste Breite
- T₂: Zweite Tiefe
- B₂: Zweite Breite
- B_{S}: Breite Schmelzsicherungsstege
- r_{K}: Krümmungsradius
- d: Abstand
- X: Längsachse Batteriezelle

## Patentansprüche

1. Batteriezellenmakromodulgehäuse (1) zum Aufnehmen einer Mehrzahl zylindrischer Batteriezellen (2) in einem Innenraum (3) des Batteriezellenmakromodulgehäuses (1),
mit einer Gehäuseschale (4), welche zwei längsseitige Wände (5) und zwei stirnseitige Wände (6) umfasst, wobei die längsseitigen Wände (5) senkrecht zu den stirnseitigen Wänden (6) angeordnet sind und sich die längsseitigen Wände (5) und die stirnseitigen Wände (6) jeweils parallel voneinander beabstandet gegenüberliegen, sodass die Wände (5, 6) den Innenraum (3) ringförmig umschließen,
wobei die Innenseiten (7) der Wände (5, 6) jeweils eine Mehrzahl Positioniereinbuchtungen (8) aufweisen, die jeweils zum Positionieren einer Batteriezelle (2) senkrecht zu der von den Wänden (5, 6) umschlossenen Durchtrittsebene (9) ausgebildet sind, wobei die Innenseiten (7) der Wände (5, 6) jeweils zwischen benachbarten Positioniereinbuchtungen (8) angeordnete Trennelemente (10) aufweisen, welche in den Innenraum (3) hineinragen, wobei die längsseitigen Wände (5) länger sind als die stirnseitigen Wände (6) und die Positioniereinbuchtungen (8) in den stirnseitigen Wänden (6) einen größeren Abstand zueinander aufweisen als die Positioniereinbuchtungen in den längsseitigen Wänden (5),
wobei das Batteriezellenmakromodulgehäuse an der Ober- und/oder der Unterseite der Gehäuseschale (4) mit einem Deckel (11) verschlossen ist, der jeweils zwei übereinanderliegende Platten (12, 13) aufweist, von denen eine Außenplatte (13) aus einem Material mit hoher Wärmeleitfähigkeit und von denen eine Innenplatte (12) aus einem elektrisch nichtleitenden Material besteht, wobei zumindest eine der Platten (12, 13) jeweils eine Mehrzahl vorgeprägter Sollbruchflächen (36) aufweist, die jeweils im Wesentlichen fluchtend mit den Längsachsen mit den im Gehäuse aufnehmbaren Batteriezellen (2) angeordnet sind, so dass im Falle einer Ausgasung einer oder mehrerer der Batteriezellen (2) austretende Heißgase die Sollbruchflächen (36) aus den Platten (12, 13) herausschlagen können.

2. Batteriezellenmakromodulgehäuse nach Anspruch 1, wobei die Durchmesser der Sollbruchflächen (36) kleiner sind als die Außendurchmesser der Batteriezellen (2).

3. Batteriezellenmakromodulgehäuse (1) nach einem der vorangehenden Ansprüche, wobei eine der längsseitigen Wände (5) in Längsrichtung an der Gehäuseober- oder - unterseite (20, 21) eine Längsnut (14) zur Aufnahme einer Platine (34) aufweist, wobei sich ausgehend von der Längsnut (14) mehrere voneinander beabstandete Durchgangsöffnungen (15) parallel zu den Positioniereinbuchtungen (8) jeweils fluchtend mit einem der innenseitigen Trennelemente (10) durch die längsseitige Wand (5) erstrecken.

4. Batteriezellenmakromodulgehäuse (1) nach Anspruch 3, wobei die Trennelemente (10), denen eine der Durchgangsöffnungen (15) fluchtend zugeordnet ist, jeweils gehäuseober- und -unterseitig senkrecht zur längsseitigen Wandebene verlaufende Nuten (18) aufweisen, wobei jeweils eine erste der Nuten (18) in die Längsnut (14) und jeweils eine zweite der Nuten (18) in die zugeordnete Durchgangsöffnung (15) mündet.

5. Batteriezellenmakromodulgehäuse (1) nach Anspruch 3 oder 4, wobei die Längsnut (14) in eine der stirnseitigen Wände (6) mündet und im Mündungsbereich eine Ausnehmung (16) zur Aufnahme einer Platinenanschlussbuchse (39) aufweist.

6. Batteriezellenmakromodulgehäuse (1) nach einem der Ansprüche 3 bis 5, mit einer Platine (34), die in der Längsnut (14) angeordnet ist und eine Mehrzahl von jeweils durch die Durchgangsöffnungen (15) reichende, mit der Platine (34) elektrisch verbundene Arme (37) aufweist, wobei die Platine (34) ferner gehäuseoberseitig und gehäuseunterseitig abgekantete Zwischenabgriffe (38) aufweist, welche sich durch die senkrecht zur längsseitigen Wandebene verlaufenden Nuten (18) erstrecken und jeweils mit elektrischen Verbindungselementen (28) zwischen zwei an die Nuten (18) angrenzenden Batteriezellen (2) in Berührkontakt stehen.

7. Batteriezellenmakromodulgehäuse (1) nach Anspruch 6, wobei die Zwischenabgriffe (38) jeweils zumindest einen Sensor zum Erfassen von Temperaturwerten und Zellspannungen aufweisen.

8. Batteriezellenmakromodulgehäuse (1) nach Anspruch 6 oder 7, wobei die Platine (34) eine daran befestigte Anschlussbuchse (39) aufweist, die in der stirnseitigen Ausnehmung (16) aufgenommen ist.

9. Batteriezellenmakromodulgehäuse (1) nach einem der vorangehenden Ansprüche, wobei eine der stirnseitigen Wände (6) außenseitig an der Gehäuseoberseite (20) und die andere der stirnseitigen Wände (6) außenseitig an der Gehäuseunterseite (21) jeweils einen eine Stufe (23) ausbildenden Rücksprung (22) aufweist wobei sich der Rücksprung (22) mit einer von der Gehäuseober- oder -unterseite (21, 22) her gesehen ersten Tiefe (T₁) über eine erste Breite (B₁) der stirnseitigen Wand (6) erstreckt, wobei die erste Breite (B₁) mit der Anzahl an Trennelementen (10) auf der Innenseite (7) der stirnseitigen Wand (6) korrespondiert, wobei der Rücksprung (22) in einem Mittenbereich der Wand (6) einen Abschnitt mit vergrößerter Tiefe (T₂) aufweist, dessen Breite (B₂) im Wesentlichen der Abmessung der vergrößerten Tiefe (T₂) entspricht.

10. Batteriezellenmakromodulgehäuse nach Anspruch 8 oder 9, wobei die an den Rücksprung (22) angrenzenden Trennelemente (10) jeweils zur Gehäuseoberseite (20) beziehungsweise zur Gehäuseunterseite (21) offene Aussparungen (24) aufweisen, welche jeweils senkrecht zu den stirnseitigen Wandebenen verlaufen.

11. Batteriezellenmakromodulgehäuse nach Anspruch 10, wobei die Aussparungen im Querschnitt durch die stirnseitigen Wände jeweils einen rechteckigen Verlauf aufweisen, so dass sich eine Zinnenstruktur (40) ergibt.

12. Batteriezellenmakromodulgehäuse (1) nach einem der vorangehenden Ansprüche, wobei an den Außenseiten (19) der stirnseitigen Wände (6) jeweils eine Mehrzahl an Rastelementen (25) angeordnet ist, wobei die Rastelemente (25) jeweils zwei parallel beabstandete Rasthaken (70) aufweisen, die sich jeweils von der stirnseitigen Wand (6) wegerstrecken und jeweils einen hinterschnittigen Rastabschnitt (71) aufweisen, wobei die Rastabschnitte (71) voneinander wegweisen.

13. Batteriezellenmakromodul (26),
mit einer Mehrzahl an Batteriezellenmikromodulen (27), die in einem Batteriezellenmakromodulgehäuse (1) nach einem der Ansprüche 1 - 12 aufgenommen sind, wobei jedes Batteriezellenmikromodul (27) aus einer Mehrzahl parallel zueinander ausgerichteter zylindrischer Batteriezellen (2) gebildet ist, welche durch jeweils ein an den Oberseiten und an den Unterseiten der Zellen (2) angeschweißtes Verbindungsblech (28) auf einem vordefinierten Abstand (d) zueinander fixiert und elektrisch kontaktiert sind,
wobei jedes Batteriezellenmikromodul (27) eine Mehrzahl von Batteriezellenpaaren (35) mit jeweils zwei parallel nebeneinander angeordneten Batteriezellen (2) umfasst, wobei die Batteriezellenpaare (35) in einer sich parallel zu den stirnseitigen Wänden (6) erstreckenden Reihe zickzackförmig paarweise versetzt zueinander angeordnet sind, so dass alle unmittelbar benachbarten Batteriezellen (2) eines Batteriezellenmikromoduls (27) im Wesentlichen denselben Abstand (d) zueinander aufweisen,
wobei die Batteriezellenmikromodule (27) parallel nebeneinander in der Gehäuseschale (4) angeordnet sind und die außen liegenden Batteriezellen (2) jeweils an jeweils einer der Positioniereinbuchtungen (8) der stirnseitigen oder der längsseitigen Wände (5, 6) anliegen,
wobei die Batteriezellenmikromodule (27) über zumindest ein Fixierungsmittel (31) in der Durchtrittsebene (9) relativ zueinander fixiert sind, so dass der Abstand zwischen allen unmittelbar benachbarten Batteriezellen (2) aneinander grenzender Batteriezellenmikromodule (27) im Wesentlichen dem Batteriezellenabstand (d) der Batteriezellenmikromodule (27) entspricht.

14. Batteriezellenmakromodul (26) nach Anspruch 13, wobei das Fixierungsmittel (31) elektrisch leitende Mikromodulverbinder (32a) umfasst, die auf den Oberseiten beziehungsweise Unterseiten benachbarter Batteriezellenmikromodule (27) fixiert sind und diese verbindet, so dass diese kontaktiert und in Reihe geschaltet sind, wobei das Fixierungsmittel (31) ferner elektrisch nichtleitende Mikromodulverbinder (32b) umfasst, welche an den Verbindungsblechen (28) fixiert sind, die nicht im Zuge der Reihenschaltung miteinander verbunden sind.

15. Batteriezellenmakromodul (26) nach Anspruch 13 oder 14, wobei das Fixierungsmittel (31) einen Füllkleber (33) umfasst, welcher zwischen den Batteriezellen (2) in der Gehäuseschale (4) eingebracht ist.

## Claims

1. A battery cell macromodule housing (1) for accommodating a plurality of cylindrical battery cells (2) in an interior space (3) of the battery cell macromodule housing (1), having a housing shell (4) which comprises two longitudinal walls (5) and two end walls (6), the longitudinal walls (5) being arranged perpendicularly to the end walls (6) and the longitudinal walls (5) and the end walls (6) lying opposite one another at a distance from one another in parallel, so that the walls (5, 6) surround the interior space (3) in an annular manner,
wherein the inner sides (7) of the walls (5, 6) each have a plurality of positioning indentations (8), each of which is designed for positioning a battery cell (2) perpendicular to the passage plane (9) enclosed by the walls (5, 6), wherein the inner sides (7) of the walls (5, 6) each have separating elements (10) arranged between adjacent positioning indentations (8), which project into the interior space (3), the longitudinal walls (5) being longer than the end walls (6) and the positioning indentations (8) in the end walls (6) being at a greater distance from one another than the positioning indentations in the longitudinal walls (5),
wherein the battery cell macromodule housing is closed at the upper side and/or the lower side of the housing shell (4) by a cover (11), each of which has two superimposed plates (12, 13), of which an outer plate (13) is made of a material with high thermal conductivity and of which an inner plate (12) is made of an electrically non-conductive material, at least one of the plates (12, 13) each having a plurality of pre-stamped predetermined breaking surfaces (36) which are each arranged substantially in alignment with the longitudinal axes with the battery cells (2) which can be accommodated in the housing,
so that, in the event of outgassing of one or more of the battery cells (2), escaping hot gases can knock the predetermined breaking surfaces (36) out of the plates (12, 13).

2. The battery cell macromodule housing of claim 1, wherein the diameters of the predetermined breaking surfaces (36) are smaller than the outer diameters of the battery cells (2).

3. The battery cell macromodule housing (1) according to one of the preceding claims, wherein one of the longitudinal walls (5) has a longitudinal groove (14) in the longitudinal direction on the housing top or bottom side (20, 21) for receiving a printed circuit board (34), wherein, starting from the longitudinal groove (14), a plurality of through-openings (15) spaced apart from one another extend through the longitudinal wall (5) parallel to the positioning indentations (8), in each case in alignment with one of the internal separating elements (10).

4. The battery cell macromodule housing (1) according to claim 3, wherein the separating elements (10), to which one of the through-openings (15) is assigned in an aligned manner, each have grooves (18) running perpendicular to the longitudinal wall plane on the upper and lower sides of the housing, wherein a first of the grooves (18) opens into the longitudinal groove (14) in each case and a second of the grooves (18) opens into the assigned through-opening (15) in each case.

5. The battery cell macromodule housing (1) according to claim 3 or 4, wherein the longitudinal groove (14) opens into one of the end walls (6) and has a recess (16) in the mouth region for receiving a circuit board connection socket (39).

6. The battery cell macromodule housing (1) according to any one of claims 3 to 5, comprising a circuit board (34) disposed in the longitudinal groove (14) and having a plurality of arms (37) each extending through the through-openings (15) and electrically connected to the circuit board (34), the circuit board (34) further having intermediate taps (38) which are bent on the upper side of the housing and on the lower side of the housing, extend through the grooves (18) running perpendicularly to the longitudinal wall plane and are each in contact with electrical connecting elements (28) between two battery cells (2) adjacent to the grooves (18).

7. The battery cell macromodule housing (1) of claim 6, wherein the intermediate taps (38) each include at least one sensor for sensing temperature values and cell voltages.

8. The battery cell macromodule housing (1) of claim 6 or 7, wherein the circuit board (34) has a connecting socket (39) attached thereto and received in the face recess (16).

9. The battery cell macromodule housing (1) according to one of the preceding claims, one of the end walls (6) having on the outside on the housing top side (20) and the other of the end walls (6) having on the outside on the housing bottom side (21) a recess (22) forming a step (23), the recess (22) extending with a first depth (T), seen from the housing top or bottom side (21, 22) over a first width (B₁) of the end wall (6), the first width (B₁ ) corresponding to the number of separating elements (10) on the inside (7) of the end wall (6), wherein the recess (22) in a central area of the wall (6) has a section with increased depth (T₂ ), the width (B₂) of which substantially corresponds to the dimension of the increased depth (T₂ ).

10. The battery cell macromodule housing according to claim 8 or 9, wherein the separating elements (10) adjacent to the recess (22) each have recesses (24) which are open towards the housing upper side (20) and towards the housing lower side (21), respectively, and which each extend perpendicularly to the end wall planes.

11. The battery cell macromodule housing of claim 10, wherein the recesses each have a rectangular shape in cross-section through the end walls, resulting in a castellated structure (40).

12. The battery cell macromodule housing (1) according to one of the preceding claims, wherein a plurality of latching elements (25) are arranged on the outer sides (19) of the end walls (6) in each case, wherein the latching elements (25) each have two parallel spaced-apart latching hooks (70) which each extend away from the end wall (6) and each have an undercut latching section (71), wherein the latching sections (71) face away from one another.

13. A battery cell macromodule (26) having a plurality of battery cell micromodules (27) accommodated in a battery cell macromodule housing (1) according to any one of claims 1-12, wherein each battery cell micromodule (27) is formed of a plurality of cylindrical battery cells (2) aligned parallel to each other and fixed and electrically contacted to each other at a predefined distance (d) by a connecting plate (28) welded to the tops and to the bottoms of the cells (2), respectively,
wherein each battery cell micromodule (27) comprises a plurality of battery cell pairs (35) each having two battery cells (2) arranged in parallel side by side, wherein the battery cell pairs (35) are arranged in a row extending parallel to the end walls (6) in a zigzag manner in pairs offset from each other so that all directly adjacent battery cells (2) of a battery cell micromodule (27) have substantially the same distance (d) from each other,
wherein the battery cell micromodules (27) are arranged in parallel side by side in the housing shell (4) and the battery cells (2) lying on the outside in each case bear against one of the positioning indentations (8) of the end walls or the longitudinal walls (5, 6),
wherein the battery cell micromodules (27) are fixed relative to one another in the passage plane (9) via at least one fixing means (31), so that the distance between all immediately adjacent battery cells (2) of adjacent battery cell micromodules (27) substantially corresponds to the battery cell spacing (d) of the battery cell micromodules (27).

14. The battery cell macromodule (26) according to claim 13, wherein said fixing means (31) comprises electrically conductive micromodule connectors (32a) fixed to and connecting the tops and bottoms, respectively, of adjacent battery cell micromodules (27) so that they are contacted and connected in series, said fixing means (31) further comprising electrically non-conductive micromodule connectors (32b) fixed to the connecting plates (28) which are not connected together in the course of series connection.

15. The battery cell macromodule (26) according to claim 13 or 14, wherein the fixing means (31) comprises a filling adhesive (33) inserted between the battery cells (2) in the housing shell (4).

## Revendications

1. Boîtier de macro-module de cellules de batterie (1) pour le logement d'une pluralité de cellules de batteries cylindriques (2) dans un espace interne (3) du boîtier de macro-module de cellules de batterie (1),
avec une coque de boîtier (4) qui comprend deux parois longitudinales (5) et deux parois frontales (6), dans lequel les parois longitudinales (5) sont disposées perpendiculairement par rapport aux parois frontales (6) et les parois longitudinales (5) et les parois frontales (6) se superposent respectivement parallèlement de manière distante les unes des autres, de façon à ce que les parois (5, 6) entourent l'espace interne (3) de manière annulaire,
dans lequel les faces internes (7) des parois (5, 6) présentent une pluralité d'encoches de positionnement (8) qui sont conçues respectivement pour le positionnement d'une cellule de batterie (2) perpendiculairement par rapport au plan de passage (9) entouré par les parois (5, 6), dans lequel les faces internes (7) des parois (5, 6) présentent des éléments de séparation (10) disposés respectivement entre des encoches de positionnement (8) adjacentes, qui dépassent dans l'espace interne (3), dans lequel les parois longitudinales (5) sont plus longues que les parois frontales (6) et les encoches de positionnement (8) des parois frontales (6) présentent une distance entre elles plus grande que les encoches de positionnement des parois longitudinales (5),
dans lequel le boîtier de macro-module de cellules de batterie est fermé sur le côté supérieur et/ou le côté inférieur de la coque de boîtier (4) avec un couvercle (11) qui comprend respectivement deux plaques superposées (12, 13) dont une plaque externe (13) est constituée d'un matériau avec une haute conductivité thermique et dont une plaque interne (12) est constituée d'un matériau non électroconducteur, dans lequel au moins une des plaques (12, 13) comprend respectivement une pluralité de surfaces de rupture (36) préalablement estampées, qui sont disposées respectivement globalement de manière alignée avec les axes longitudinaux avec les cellules de batterie (2) pouvant être logées dans le boîtier, de façon à ce que, dans le cas d'un dégazage d'une ou plusieurs des cellules de batterie (2), les gaz chauds qui sortent peuvent éjecter les surfaces de rupture (36) hors des plaques (12, 13).

2. Boîtier de macro-module de cellules de batterie selon la revendication 1, dans lequel les diamètres des surfaces de rupture (36) sont inférieurs aux diamètres extérieurs des cellules de batterie (2).

3. Boîtier de macro-module de cellules de batterie (1) selon l'une des revendications précédentes, dans lequel une des parois longitudinales (5) comprend, dans la direction longitudinale, sur la face supérieure ou inférieure (20, 21), une rainure longitudinale (14) pour le logement d'une platine (34), dans lequel plusieurs ouvertures de passage (15) s'étendent à partir de la rainure longitudinale (14) parallèlement aux encoches de positionnement (8) respectivement de manière alignée avec un des éléments de séparation (10) à travers la paroi longitudinale (5).

4. Boîtier de macro-module de cellules de batterie (1) selon la revendication 3, dans lequel les éléments de séparation (10), dont un est aligné avec les ouvertures de passage (15), comprennent respectivement sur la face supérieure et la face inférieure du boîtier, des rainures (18) s'étendant perpendiculairement par rapport au plan de paroi longitudinale, dans lequel respectivement une première des rainures (18) débouche dans la rainure longitudinale (14) et respectivement une deuxième des rainures (18) débouche dans l'ouverture de passage (15) correspondante.

5. Boîtier de macro-module de cellules de batterie (1) selon la revendication 3 ou 4, dans lequel la rainure longitudinale (14) débouche dans une des parois frontales (6) et comprend, dans la zone de l'embouchure, un évidement (16) pour le logement d'une douille de raccordement de platine (39).

6. Boîtier de macro-module de cellules de batterie (1) selon la revendication 3 à 5, avec une platine (34) qui est disposée dans la rainure longitudinale (14) et qui comprend une pluralité de bras (37) traversant respectivement les ouvertures de passage (15) et reliés électriquement avec la platine (34), dans lequel la platine (34) comprend en outre, sur la face supérieure du boîtier et sur la face inférieure du boîtier, des prises intermédiaires chanfreinées (38) qui s'étendent à travers les rainures (18) s'étendant perpendiculairement par rapport au plan de paroi longitudinale et qui sont en contact respectivement avec des éléments de liaison électrique (28) entre deux cellules de batterie (2) adjacentes aux rainures (18).

7. Boîtier de macro-module de cellules de batterie (1) selon la revendication 6, dans lequel les prises intermédiaires (38) comprennent respectivement au moins un capteur pour la mesure de valeurs de température et de tensions de cellules.

8. Boîtier de macro-module de cellules de batterie (1) selon la revendication 6 ou 7, dans lequel la platine (34) comprend une douille de raccordement (39) fixée à celle-ci, qui est logée dans l'évidement frontal (16).

9. Boîtier de macro-module de cellules de batterie (1) selon l'une des revendications précédentes, dans lequel une des parois frontales (6) comprend, sur le côté externe de la face supérieure du boîtier (20) et l'autre paroi frontale (6) comprend, sur le côté externe de la face inférieure du boîtier (21), un renfoncement (22) formant un épaulement (23), dans lequel le renfoncement (22) s'étend avec une première profondeur (T₁), vue de la face supérieure ou inférieure du boîtier (21, 22), sur une première largeur (B₁) de la paroi frontale (6), dans lequel la première largeur (B₁) correspond au nombre d'éléments de séparation (10) sur la face interne (7) de la paroi frontale (6), dans lequel le renfoncement (22) comprend, dans une zone centrale de la paroi (6), une portion avec une profondeur augmentée (T₂), dont largeur (B₂) correspond globalement à la dimension de la profondeur augmentée (T₂).

10. Boîtier de macro-module de cellules de batterie selon la revendication 8 ou 9, dans lequel les éléments de séparation (10) adjacents au renfoncement (22) comprennent respectivement des évidements (24) ouverts vers la face supérieure du boîtier (20) ou vers la face inférieure du boîtier (21), qui s'étendent respectivement perpendiculairement par rapport aux plans des parois frontales.

11. Boîtier de macro-module de cellules de batterie selon la revendication 10, dans lequel les évidements présente respectivement, en coupe transversale à travers les parois frontales, une forme rectangulaire, de façon à ce qu'il en résulte une structure en créneaux (40).

12. Boîtier de macro-module de cellules de batterie (1) selon l'une des revendications précédentes, dans lequel, sur les faces extérieures (19) des parois frontales (6), est disposée respectivement une pluralité d'éléments d'encliquetage (25), dans lequel les éléments d'encliquetage (25) comprennent respectivement deux crochets d'encliquetage (70) distants parallèlement entre eux, qui s'éloignent respectivement de la paroi frontale (6) et qui comprennent respectivement une portion d'encliquetage en contre-dépouille (71), dans lequel les portions d'encliquetage (71) sont orientées dans les directions opposées entre elles.

13. Macro-module de cellules de batterie (26), avec une pluralité de micro-modules de cellules de batterie (27) qui sont logés dans un boîtier de macro-module de cellules de batterie (1) selon l'une des revendications 1 - 12, dans lequel chaque macro-module de cellules de batterie (27) est constitué d'une pluralité de cellules de batterie cylindriques (2) orientées parallèlement entre elles, qui sont fixées et mises en contact électrique entre elles à une distance (d) prédéfinie à l'aide d'une tôle de liaison (28) soudée sur les faces supérieures et les faces inférieures des cellules (2),
dans lequel chaque macro-module de cellules de batterie (27) comprend une pluralité de paires de cellules de batterie (35) avec respectivement deux cellules de batterie (2) disposées parallèlement les unes à côté des autres,
dans lequel les paires de cellules de batterie (35) sont disposées en zigzag par paires de manière décalée entre elles dans une rangée s'étendant parallèlement aux parois frontales (6), de façon à ce que toutes les cellules de batterie (2) immédiatement adjacentes d'un micro-module de cellules de batterie (27) présentent globalement la même distance (d) entre elles,
dans lequel les micro-modules de cellules de batterie (27) sont disposées parallèlement les unes à côté des autres dans la coque de boîtier (4) et les cellules de batterie (2) situées à l'extérieur s'appuient respectivement contre respectivement une des encoches de positionnement (8) des parois frontales ou des parois longitudinales (5, 6),
dans lequel les micro-modules de cellules de batterie (27) sont fixées entre elles par l'intermédiaire d'au moins un moyen de fixation (31) dans le plan de passage (9), de façon à ce que la distance entre toutes les cellules de batterie (2) immédiatement adjacentes des micro-modules de cellules de batterie (27) adjacents corresponde globalement à la distance entre les cellules de batterie (d) des micro-modules de cellules de batterie (27).

14. Macro-module de cellules de batterie (26) selon la revendication 13, dans lequel le moyen de fixation (31) comprend des connecteurs de micro-modules électroconducteurs (32a), qui sont fixés sur les faces supérieures ou sur les faces inférieures de micro-modules de cellules de batterie (27) adjacents, et relie ceux-ci de façon à ce que ceux-ci soient mis en contact et branchés en série,
dans lequel le moyen de fixation (31) comprend en outre des connecteurs de micro-modules non électroconducteurs (32b) qui sont fixés aux tôles de liaison (28), qui ne sont pas reliées entre elles lors du branchement en série.

15. Macro-module de cellules de batterie (26) selon la revendication 13 ou 14, dans lequel le moyen de fixation (31) comprend un adhésif de remplissage (33) qui est introduit entre les cellules de batterie (2) dans la coque de boîtier (4).
